(19) Europäisches Patentamt
European Patent Office
Office européen des brevets

(11) **EP 1 404 104 B1**

(12) **EUROPEAN PATENT SPECIFICATION**

(45) Date of publication and mention
of the grant of the patent:
**02.01.2013 Bulletin 2013/01**

(51) Int Cl.:
***H04N 1/00*** *(2006.01)*

(21) Application number: **03021158.5**

(22) Date of filing: **23.09.2003**

(54) **Method of and apparatus for processing image data, and computer product**

Bilddatenverarbeitungsverfahren und -vorrichtung und Computerprodukt

Procédé et dispositif de traitement de données d'image, et produit informatique

(84) Designated Contracting States:
**DE ES FR GB IT NL**

(30) Priority: 24.09.2002 JP 2002276444
15.10.2002 JP 2002299886
15.07.2003 JP 2003196867

(43) Date of publication of application:
**31.03.2004 Bulletin 2004/14**

(73) Proprietor: **Ricoh Company, Ltd.**
**Tokyo 143-8555 (JP)**

(72) Inventors:
• **Ohyama, Maki**
**Ohta-ku**
**Tokyo 143-8555 (JP)**
• **Kawamoto, Hiroyuki**
**Ohta-ku**
**Tokyo 143-8555 (JP)**
• **Ohkawa, Satoshi**
**Ohta-ku**
**Tokyo 143-8555 (JP)**
• **Yoshida, Tomoyuki**
**Ohta-ku**
**Tokyo 143-8555 (JP)**
• **Miyamoto, Isao**
**Ohta-ku**
**Tokyo 143-8555 (JP)**
• **Togami, Atsushi**
**Ohta-ku**
**Tokyo 143-8555 (JP)**
• **Nishita, Taira**
**Ohta-ku**
**Tokyo 143-8555 (JP)**
• **Shirata, Yasunobu**
**Ohta-ku**
**Tokyo 143-8555 (JP)**
• **Tone, Takeharu**
**Ohta-ku**
**Tokyo 143-8555 (JP)**
• **Arai, Hiroshi**
**Ohta-ku**
**Tokyo 143-8555 (JP)**
• **Sugiyama, Naoki**
**Ohta-ku**
**Tokyo 143-8555 (JP)**

(74) Representative: **Schwabe - Sandmair - Marx**
**Patentanwälte**
**Stuntzstraße 16**
**81677 München (DE)**

(56) References cited:
EP-A- 1 187 446       EP-A1- 1 508 098
WO-A-02/05028       WO-A-95/34051
US-A- 6 069 706       US-A1- 2001 051 007
US-A1- 2002 080 250       US-A1- 2002 141 380
US-A1- 2002 156 923       US-A1- 2003 123 104

• **PATENT ABSTRACTS OF JAPAN vol. 2000, no. 01, 31 January 2000 (2000-01-31) & JP 11 298697 A (CANON INC), 29 October 1999 (1999-10-29)**

**Description**

BACKGROUND OF THE INVENTION

1) Field of the Invention

The present invention relates to a method of and apparatus for processing image data and sending the image data processed to an external device.

2) Description of the Related Art

Some of the image forming apparatuses, such as the digital copiers, printers, or scanners, have a communication function so that they can communicate with other information processing units, such as personal computer, via a network. For example, scanners those scan the images and send the image data read to personal computers via a network are know in the art.

An image editing system including an extension box that is designed based on architecture of a general purpose computer system is disclosed in Japanese Patent Application Laid Open Publication No. 2000-333026. In this image editing system, image data that is read by optical scanning by an image input section (scanning section) of the image forming apparatus, is stored as an image file in a hard disc unit (scan box) in the extension box. The image file in the scan box can be held commonly in each computer system (external unit) in the network.

Following is the explanation of a procedure for processing in a case where the scan box function of the image editing system disclosed in Japanese Patent Application Laid Open Publication No. 2000-333026 is used.

In this image editing system, the image forming apparatus selects scanning parameters (copy parameters) such as resolution, gradation, scale factor, reading face, image size, saving area (memory area). After reading of an image on a paper by the image input section, the image data is transferred to the image processing section and image processing in accordance with scanning parameters is performed. In this system, even if the image data is not output (image formation) by the image data output section, it is converted to a data format for outputting. In other words, image processing including conversion of color coordinates from RGB (red, green, and blue) to CMYK (cyan, magenta, yellow, and black), gradation correction etc, is performed. The image data after the image processing is transferred to the extension box where it is compressed. The compressed image data is stored temporarily (memory) in the scan box that is assigned in a predetermined disc area in the hard disc unit. When image data of all documents (pages) is stored, fetching of image data from the scan box by a client in the network is enabled,

Moreover, a procedure of scan image processing when the scan box function (one of the functions for transmitting a scan image to client computer) is used, is disclosed in Japanese Patent Application Laid Open Publication No. 2000-333026. According to this procedure for image processing, a document is read and scan document image processing is performed according to processing conditions set by operating input. However, since the scan box function does not always require a print out, the image data is stored without generating a data format of YMCK that is required for print out. In other words, conversion of color coordinates from RGB to YMCK, gradation correction, compressing of image data of the scan image is omitted and RGB data after scan image processing is stored in the scan box. Further, the client computer in the network fetches the image data from the scan box as it is in the form of RGB data when it is stored and transfers it to its own saving area like local disc. The scan image can be seen on a monitor display of the client computer based on RGB data that is transferred.

However, the image editing system disclosed in Japanese Patent Application Laid Open Publication No. 2002-333026 has following problems.

First of all, a user presses a copy button and acquires a copy image. While transmitting, the user presses a scan button and acquires an image that is to be transmitted. Thus, when the same document is to be copied and is to be transmitted, the image is to be read twice by subjecting the document to scanning twice, which is an excess job.

Moreover, the image data that is stored in the hard disc unit is in a format (a special format for image forming apparatus) that can be easily handled in an image forming apparatus like a digital copying machine. Furthermore the image data is compressed by a special algorithm for saving of memory. Therefore, even if the image data is transmitted through the network to an information processing unit like a personal computer that is an external unit, it cannot be viewed and edited by a general application.

Moreover, in conventional transmit scan function, for example in a transmit scan function in the image editing unit disclosed in Japanese Patent Application Laid Open Publication No. 2000-333026, the data is stored in the hard disc in the form of RGB data of the scan image assuming that the image data in RGB format is used in a computer terminal to which the data is transmitted. In other words, while transmitting the stored data, conversion of image format of the stored data is not taken into consideration. Therefore, requirement of a client for transmission of the data in an image format that is different than the image data cannot be fulfilled.

When an image processing unit that has a transmission function, includes an image forming section like a copying machine, the productivity of image formation can be improved by storing the input image in a special data format that is suitable to image formation. This advantage is not there in the system disclosed in Japanese Patent Application Laid Open Publication No, 2000-333026 that stores RGB data format.

US-B1-7 164 486 pertains to an image processing device.

US-A-6 069 706 pertains to an image reading device for reaching an image and sending image data to an externally connected host computer.

The image forming apparatus described in

PATENT ABSTRACTS OF JAPAN vol. 2000, no. 01, 31 January 2000 & JP 11 298697 A, US 2002/080250 A1,

WO 95 34051 A,

EP-A-1 187 446,

US 2001-/051007 A1, and

EP-A-1 508 098

all have a communication function in common and comprise processing means for image acquisition, image processing and image transmission.

The present invention is defined by the subject-matter of the appended claims.

It is an object of the present invention to at least solve the problems in the conventional technology.

An image processing apparatus according to an example includes a reader that reads an image on a document to thereby acquire image data corresponding to the image, the image data being in a first format; a memory that stores the image data acquired; a format converter that converts the first format of the image data stored to a second format that is acceptable to an external device; and a transmitter that transmits the image data in the second format to the external device,

A method of processing image data according to another example includes reading an image on a document to thereby acquire image data corresponding to the image, the image data being in a first format; storing the image data acquired; converting the first format of the image data stored to a second format that is acceptable to an external device; and transmitting the image data in the second format to the external device,

A computer program according to still another example makes it possible to realize the method according to the present invention on a computer.

A computer readable recording medium according to still another example makes it possible store and distribute the computer program according to the present invention.

An image processing apparatus according to still another example includes a memory that stores image data, the image data being in a first format; a format converter that converts the first format of the image data stored in the memory to a second format that is acceptable to an external device; and a transmitter that transmits the image data in the second format to the external device.

An image processing apparatus according to still another example includes a printer engine that forms an image on a recording medium based on image data, the image data being in a first format; a memory that stores the image data; a format converter that converts the first format of the image data stored to a second format that is acceptable to an external device based on predetermined conditions; a connecting unit that connects with a network, wherein the external device is connected to the network; and a transmitter that transmits the image data in the second format to the external device via the connection unit.

The other objects, features, and advantages of the present invention are specifically set forth in or will become apparent from the following detailed descriptions of the invention when read in conjunction with the accompanying drawings.

## BRIEF DESCRIPTION OF THE DRAWINGS

Fig. 1 is a block diagram of an image forming apparatus according to an embodiment of the present invention, with emphasis given on copying;

Fig. 2 is a block diagram of a scanning correction section;

Fig. 3 is a block diagram of a printing correction section;

Fig. 4 illustrates the flow of the image data during transmission;

Fig. 5 is a block diagram of an image format converter;

Fig. 6 illustrates the flow of the image data up to the storage of the image data in a hard disc drive (hereinafter, "HDD") and during transmitting and copying;

Fig. 7 illustrates a relation between the image format converter an operation panel;

Fig, 8 illustrates another view of a relation between the image format converter an operation panel;

Fig. 9 is a schematic of a digital color copying machine according to a forth embodiment of the present invention:

Fig. 10 is a block diagram of a scanning correction section;

Fig. 11 is a block diagram of a printing correction section;

Fig. 12 illustrates the flow of image data during data format conversion;

Fig. 13 is a block diagram of a data format converter;

Figs. 14A to 14C are illustrations of a resolution conversion function;

Figs. 15A to 15C are illustrations of a table interpolation (tetrahedral interpolation) used in conversion of color-space in the data format converter;

Fig. 16 is an illustration of transmission of image data having different data format, to an external personal computer (hereinafter, "external PC");

Fig. 17 is a block diagram of the data format converter;

Fig. 18 is a block diagram of the data format converter;

Figs. 19A to 19C are views to explain the filtering performed by a filtering processor;

Figs. 20A and 20B are views to explain the processing by the γ processor;

Figs: 21A and 21B are view to explain the dithering performed by a half-tone processor;

Fig. 22 is an illustration of random dithering by the half-tone processor;

Fig. 23 is an illustration of transmission of image data having different data format to an external PC;

Fig. 24 is a block diagram of the data format converter;

Fig. 25 is a block diagram of the data format converter; and

Fig. 26 is an illustration of transmission of image data having different data format, to an external PC.

## DETAILED DESCRIPTION

Exemplary embodiment of the method of and apparatus for forming image and the computer product according to the present invention are explained below while referring to the accompanying diagrams.

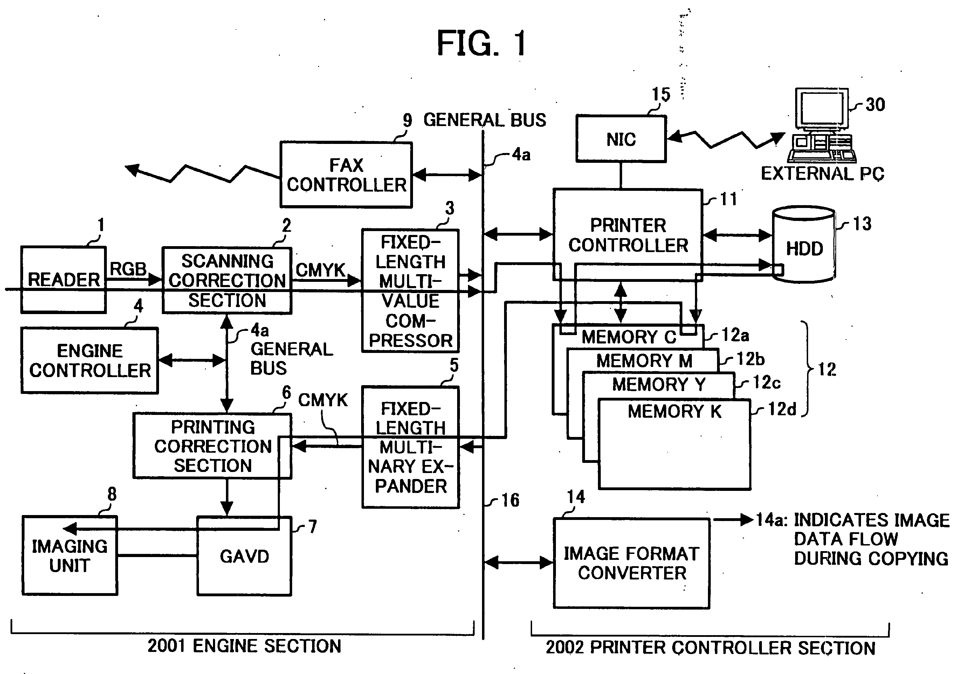

Fig. 1 is a block diagram of a digital copying machine, which is an image forming apparatus, according to one embodiment of the present invention. This digital copying machine is, although not limited, a multi function peripheral (hereinafter, "MFP"). Fig. 1 particularly shows the flow of the image data during copying.

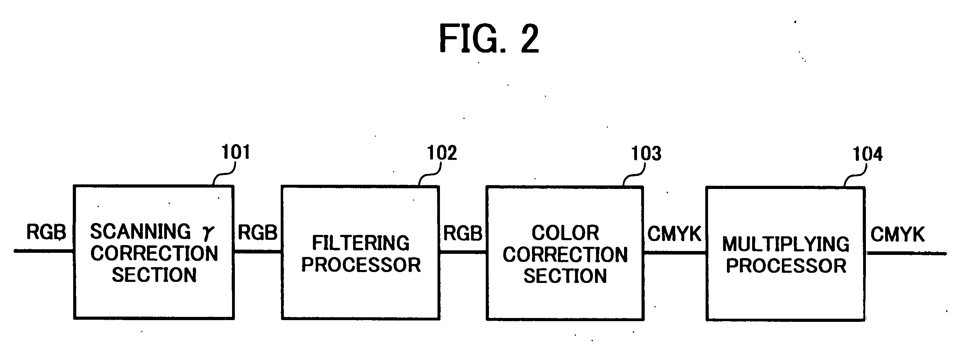

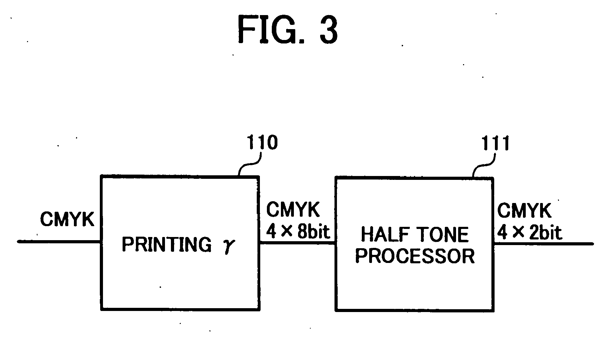

Fig. 2 is a block diagram of a scanning correction section and Fig. 3 is a block diagram of a printing correction section, in the digital copying machine shown in Fig. 1.

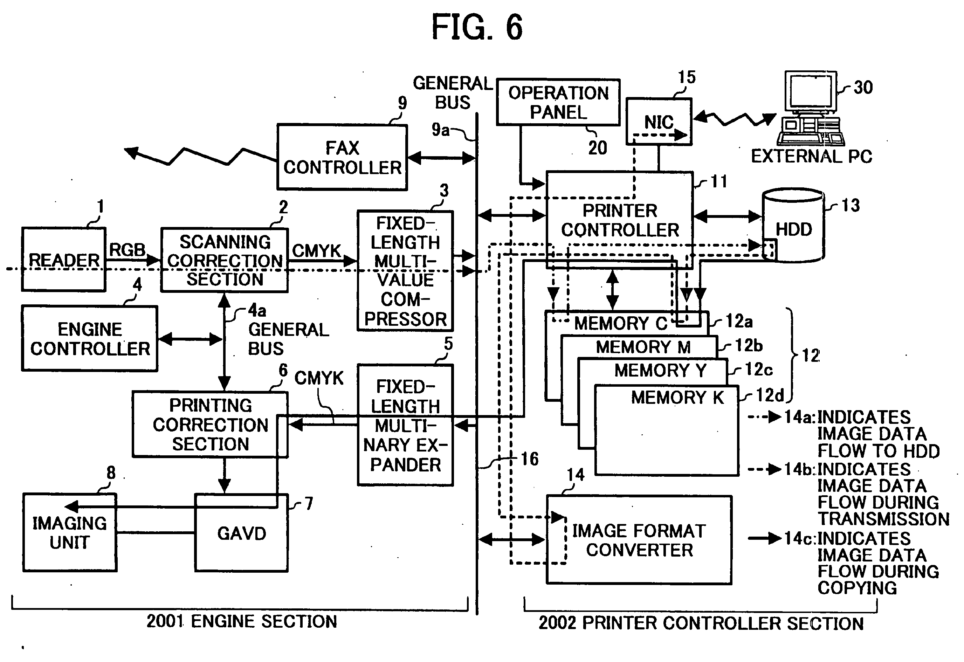

This digital copying machine includes a plotter engine (hereinafter, "engine section") 2001, printer controller section 2002, and an operation panel 20 (see Fig. 6).

The engine section 2001 includes a reader (i.e., a scanner) 1, a scanning correction section 2, a fixed-length multinary compressor 3, an engine controller 4, a fixed-length multinary expander 5, a printing correction section 6, a writing unit (hereinafter, "GAVD") 7, an imaging unit 8, and a FAX controller 9.

The printing correction section 6 includes a printer controller. 11, a semiconductor memory 12, an HDD 13, an image format converter 14, and a network interface controller (hereinafter, "NIC").

The image processing apparatus in the digital copying machine includes sections excluding sections equivalent to printing section (e.g. GAVD 7, imaging unit 8) of the engine section 2001.

The engine section 2001 and the printer controller section 2002 are connected to each other by a general bus interface (hereinafter, "interface" is mentioned as I/F) 16.

The reader 1 optically reads an image on a document that is set in a reading position (e.g. on an exposure glass) or on a document that passes over a reading position. The reader 1 amplifies by photoelectric exchange for optical analysis of each of red (hereinafter, "R"), green (hereinafter, "G"), and blue (hereinafter, "B") colors. Then, the reader 1 generates image data of eight bits, or more, of each of RGB colors that is an electric image signal.

The document to be read is set by a user in the reading position of the reader 1 or the documents are automatically fed one by one from a bypass tray by an automatic document feeder (hereinafter, "ADF") and set in the reading position or the documents are made to pass over the reading position by the ADF. Although, image data read by the reader is converted to eight bits of each color, the conversion is not restricted to eight bits only.

As is shown in Fig. 2, the scanning correction section 2 includes a scanning gamma (hereinafter, "γ") correction section 101, a filtering processor 102, a color correction section 103, and a multiplying processor 104. The scanning correction section 2 performs scanning γ correction, filtering, color correction (color conversion from RGB to CMYK), and multiplication of image data that is sent from the reader 1. The scanning correction section 2 then sends the image data to the fixed-length multinary compressor 3 (an irreversible compressor of fixed-length) shown in Fig. 3.

The fixed-length multinary compressor 3 that is a compression section performs irreversible compression (encoding) of the image data that is sent from the scanning correction section 2. In other words, the fixed-length multinary compressor 3 converts color data (color signal) of eight bits for each color of CMYK to color data of two bits of each color (or may be more than two bits).

The output section of the fixed-length multinary compressor 3 is connected to a general bus I/F 16. The CMYK image data that is irreversibly compressed by the fixed-length multinary compressor 3 is sent to the printer controller 11 of the printer controller section 2002 through the general bus I/F 16.

The printer controller 11 uses a microcomputer that includes a central processing unit (hereinafter, "CPU"), a read only memory (hereinafter, "ROM"), and a random access memory (hereinafter, "RAM") and controls the printer controller section 2002.

The semiconductor memory 12 is installed independently for each color of CMYK. The semiconductor memories 12 for each of the colors can store CMYK image data by the control of the printer controller 11.

The HDD 13 is a mass storage unit that can store data like image data of large quantity, job history data, and programs including the program in the present invention. Moreover, the HDD 13 and the semiconductor memory 12 are equivalent to image storage section. Other mass storage units like optical disc unit can be use instead of HDD 13.

The data that is stored in the semiconductor memory 12 is also stored in HDD 13. This is to avoid rereading of the same document in a case of blocking of a paper or when the printing is not completed properly during taking of a print out. This is also to perform electronic sorting by rearranging image data on a plurality of documents. In recent years, there are digital copying machines in which image data of a document that is read is stored in HDD etc. and reoutput (reprint out or retransmission) function is provided whenever necessary.

In the present embodiment, the CMYK image data is subjected to irreversible compression. However, if the band of the general bus I/F 16 is sufficiently wide and if the storage capacity of the HDD 13 is large, the data may also be stored in uncompressed form. By storing the data in uncompressed form, image deterioration due to irreversible compression can be prevented.

While copying, the CMYK image data (compressed data) that is stored in the HDD 13 is transmitted once by the printer controller 11 to the semiconductor memory 12. The image data then passes through the general bus I/F 16 and is transmitted to the fixed-length multinary expandor 5 in the engine section 2001.

The fixed-length multinary expandor (the irreversible expandor of fixed-length) 5 expands (decodes) the image data (compressed data) that is transferred from the printer controller section 2002. In other words, the color data of two bits for each of CMYK colors is converted to the color data of 8 bits for each of CMYK colors. The converted image data is then transmitted to the printing correction section 6.

The printing correction section 6 includes a printing $\gamma$ correction section 110 and a half-tone processor 111. The printing correction section 6 performs printing $\gamma$ correction of color data for each of CMYK colors that is transmitted from the fixed-length multinary expander 5, one after another and performs half-tone processing to suit the GAVD 7 and the imaging unit 8. The processed image data for each color is then transmitted to the GAVD 7.

The GADV 7 modulates and emits semiconductor laser (not shown in the diagram) based on C image data that is transmitted from the printing correction section 6 and causes to emit a laser beam. It further deflects the beam periodically by a polygon mirror (a rotary polygon mirror) and scans the surface of a photosensitive drum by a laser beam that is focused by a scanning lens, More concretely, an electrostatic latent image is formed by repetitive scanning in a main scanning direction on a surface of a photosensitive body (that is uniformly charged in advance by a charger of the imaging unit) in the form of a drum or a belt rotating in the secondary scanning direction. Further, the image data for each of M, Y, and K that is transmitted from the printing correction section 6 one after another is processed similarly.

The imaging unit 8 performs image formation with any of the know methods. When forming the image, for example, the surface of the photosensitive body is charged uniformly by a charger. Cyan color (C) toner is adhered to an electrostatic latent image corresponding to C image data that is formed on the surface of the photosensitive body, by a developing unit for C to form a C toner image. Then, the toner image is transferred to an intermediate transferring body in the form of a drum or a belt by a primary transferring unit.

Further, magenta color (M) toner is adhered to an electrostatic latent image corresponding to C image data that is formed on the surface of the photosensitive body, by a developing unit for M to form an M toner image. The M toner image is transferred to an intermediate transferring body by the primary transferring unit. Then, similar processing is performed by developing units for yellow color (Y) and black color (B) one after another thereby forming four superimposed toner images on the intermediate transferring body. The four colored superimposed toner image is transferred collectively by a secondary transferring unit to a paper (transfer paper) that is fed from a feeding section. The toner image transferred to the paper is fixed by melting and the paper (copy) is discharged in a discharging section. The imaging is not necessarily to be in the order of CMYK.

The engine controller 4 uses a microcomputer that includes a CPU, a ROM, and a RAM and controls the overall engine section,

The FAX controller 9 controls transmission and reception of FAX data (image data) with other image forming apparatus like a digital copying machine having a FAX function or a FAX unit, through a public line,

The image format converter 14 converts formats of image data and is explained below in detail,

The digital copier performs communication with an external PC 30 via NIC 15. The digital copier and the external PC 30 are connected to each other via a network such as a local area network (hereinafter, "LAN").

The operation panel 20 (Fig. 6) includes operating buttons like a copy button (or key) and a display to display various information.

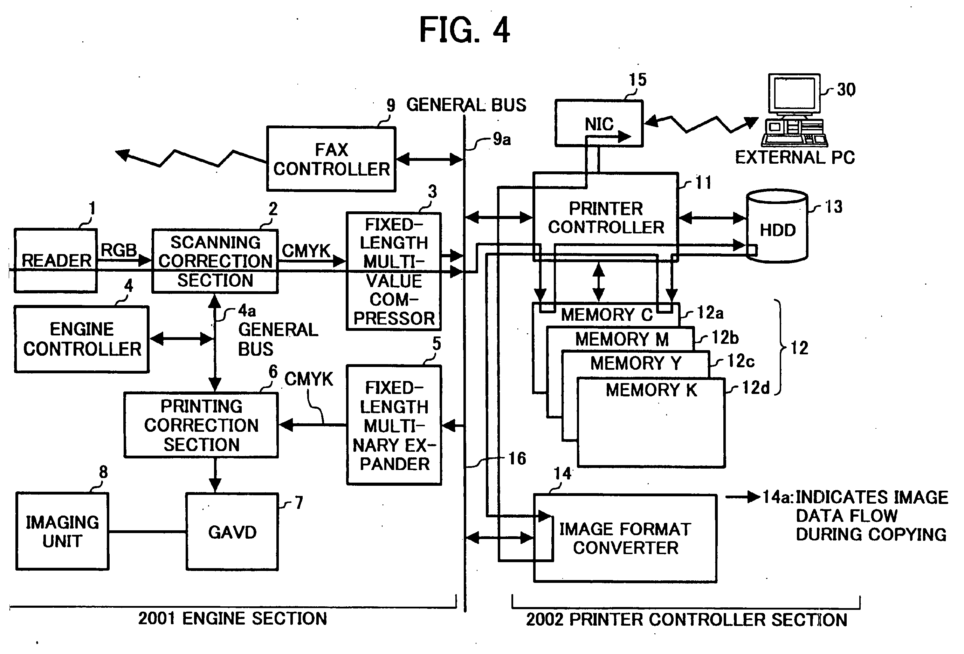

Fig. 4 is a block diagram of a digital copying machine according to a first embodiment of the present invention. Fig. 4 also illustrates flow of image data during transmission.

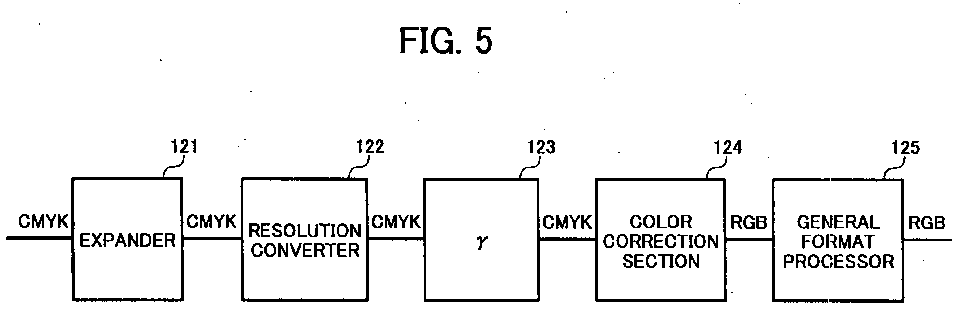

Fig. 5 is a block diagram of an image format converter 14 in Fig. 4.

By comparing Fig. 1 with Fig. 4 it can be seen that image data flow till storing of image in the HDD 13 is same as that during copying and hence explanation for the image data flow is omitted here.

Compressed two bit image data of CMYK colors that is transmitted through a same path as during copying is stored in the HDD 13.

In a case of transmitting the image data through the network to the PC 30 which is an external unit, the CPU in the printer controller 11 reads out two bits image data (compressed data) for CMYK colors that is stored in the HDD 13 and transfers it once to the semiconductor memory 12. The transferred image data is then read out, then transmitted to the image format converter 14 through the general bus I/F16, and processed as given below.

As is shown in Fig. 5, the image format converter 14 includes an expander 121, a resolution converter 122, a γ correction section 123. a color correction section 124, and a general format processor 125. The image format converter 14 converts the image format of image data (carries out image processing) that is transmitted from the printer controller 11 through the general bus I/F 16.

In other words, the expandor 121 expands (converts the two bits data for each of CMYK colors to eight bits color data of each of CMYK colors) the transmitted image data (compressed data). The resolution converter 122 converts the resolution of the expanded image data to a resolution that is set in advance. The image data subjected to the resolution conversion is subjected to γ correction based on γ correction data (γ curve) that is set in advance. The image data subjected to γ correction is then subjected to color correction in the color correction section 124 (color conversion from CMYK colors to RGB colors). The general format processor 125 converts the format of the image data subjected to color correction to a general format.

The color correction section 124 is not restricted to convert the image data from CMYK colors to RGB colors only, but may also be structured to convert to other color coordinates (color-space) like standard red, green, and blue (hereinafter, "sRGB") and YUV. In this case, the conversion can be specified by a user by operating the operation panel 20 or PC 30.

The CPU of the printer controller 11 transmits the image data that is subjected to the format conversion by the image format converter 14 by the NIC 15 to other general information processor (external unit) or the PC 30 in the network.

The image format converter 14 is explained below in further detail.

The general format processor 125 of the image format converter 12 converts the image data that is subjected to color correction by the color correction section 124, to a general format that can be used (viewed or edited) in a general information processor like the PC 30 that is an external unit. The image data is converted to formats like Joint Photographic Expert Group (hereinafter, "JPEG") format, Bitmap (hereinafter, "BPM") format, or Tagged Image File Format (hereinafter, "TIFF") format.

In the first embodiment, since the CPU in the printer controller 11 is operated according to a program in the present invention that is stored (recorded) in the ROM or HDD 13, it can perform as a transmitting section.

Thus, the CPU in the printer controller 11 causes the image format converter 14 to perform the conversion of the image format corresponding to the image data (stored in the HDD 13) read out from the semiconductor memory 12. The data subjected to the format conversion is transmitted to the PC 30 in the network by the NIC 15. Thus, in a case of copying and transmitting of the same document, the image on the document is read only once thereby allowing to improve the working efficiency of the user. Moreover, the data that is read from the document can be used as it is, by viewing and editing it in the PC 30.

The image format converter 14 may be equipped with a special format processor instead of the general format processor 125. The image data that is subjected to color correction by the color correction section 124 can be allowed to be converted to a special format (predetermined format) that can be used in an external unit other than the general information processor. In this case, the external unit is to be equipped with a special software (special program) for using the image data having the special format. Thus, the image data read from the document can be viewed and edited in the external unit other than the information processor, thereby enabling to use it as it is.

In the first embodiment, although the image format converter 14 includes the expandor 121, the resolution converter 122, the γ correction section 123, and the color correction section 124 apart from the genera format processor 125 (or the special format processor), the other sections apart from the general format processor are not necessary compulsorily. In this case, the CPU in the printer controller 11 causes the general format processor 125 (or the special format processor) of the image format converter to convert the image data read out from the semiconductor memory 12 to a general format (or a special format). The image data that is subjected to conversion can be transmitted by the NIC 15 to the PC 30 in the network or other external unit.

Or, the image format converter 14 may be equipped with either any one of or a plurality of (voluntary combination) the expander 121, the resolution converter 122, the γ correction section 123, and the color correction section 124 apart from the general format processor 125 (or the special format processor). In this case, the CPU in the printer controller 11 can perform either any one of or a plurality of steps from (1) to (4) explained below.

(1) The image data (compressed data) that is read from the semiconductor memory 12 is expanded by the expandor 121 in the image format converter 14. The format of the expanded data is converted to a general format (or a special format) by the general format processor 125 (or the special format processor). The image data subjected to the format conversion is then transmitted by the NIC 15 to the PC 30 or other external unit in the network.

(2) The resolution of the image data that is read from the semiconductor memory 12 is converted by the resolution converter 122 in the image format converter 14, The format of the image data that is subjected to resolution conversion is converted to a general format (or a special format) by the general format processor 125 (or the special format converter). The image data subjected to the format conversion is then transmitted by the NIC 15 to the PC 30 or other external unit in the network,

(3) The image data that is read from the semiconductor memory 12 is subjected to γ correction by the γ correction section 123 in the image format converter 14. The format of the image data subjected to the γ correction is converted to a general format (or a special format) by the general format processor 125 (or the special format processor). The image data subjected to the format conversion is then transmitted by the NIC 15 to the PC 30 or other external unit in the network,

(4) The image data that is read from the semiconductor memory 12 is subjected to color correction by the color correction section 124 in the image format converter 14. The format of the image data subjected to the color correction is converted to a general format (or a special format) by the general format processor 125 (or the special format processor). The image data subjected to the format conversion is then transmitted by the NIC 15 to the PC 30 or other external unit in the network.

Fig. 6 is a block diagram of the digital copying machine according to a second embodiment of the present invention, This diagram also shows the flow of image data up to the storage of the image data in the HDD 13, and an image data flow during transmission and copying.

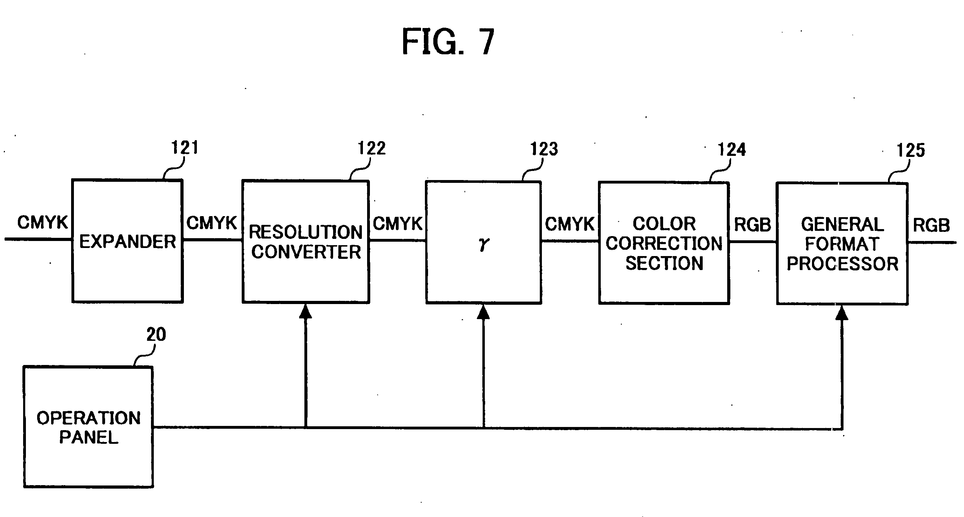

Fig. 7 is a diagram of connections of the image format converter 14 in Fig. 6 with each section and an operation panel.
In the second embodiment, unlike in the first embodiment (Fig, 4), the printer controller 11 can set the content of conversion to be performed by the image format converter 14 in accordance with the requirement (operation signal) generated by an operation by a user on the operation panel (may be an operation by a user on an external unit like the PC 30 etc.). In other words, in the second embodiment, it is possible to set (select) the resolution that is to be converted by the resolution converter 122 in the image format converter 14, the γ correction data (γ curve) that is used for γ correction by the γ correction section 123, and the general format (or a special format) that is converted by the general format processor 125 (or the special format processor).
When a user presses a document box button on the operation panel 20, the printer controller 11 transmits a corresponding reading required command to the engine controller 4 through the general bus I/F 16.
The engine controller 14 instructs the reader 1 to read on receiving the reading required command.
The reader 1 reads the image after receiving the read instruction from the engine controller 4. The image data that is read is stored in the HDD 13 after being transmitted through an image processing path that is indicated by alternate long and short dashed lined arrows in Fig. 6 (details are explained in the first embodiment and hence omitted here).
For example, when users (operators) A, B, and C use the digital copying machine, corresponding to image data stored in the HDD 13, user A requires a copy image, user B requires electronic image data in JPEG format with resolution of 300 dpi, and user C requires electronic image data in BMP format having higher γ density and resolution of 100 dpi.
When the user A presses the copy button on the operation panel 20, user A's requirement signal is transmitted to the printer controller 11. The printer controller 11 receives the user A's requirement signal for the copy image and transfers the image data stored in the HDD 13 to the semiconductor memory 12 and transmits it to the engine section 2001. In other words, the image data that is transmitted through a path that is indicated by a continuous line is output to the GAVD 7 and is output as a copy image by the imaging unit 8.
User B presses a transmission button on the operation panel 20 and selects resolution of 300 dpi and JPEG format. User B's requirement signal is transmitted to the printer controller 11. The printer controller 11 receives the user B's requirement signal and transfers the image data stored in the HDD 13 to the semiconductor memory 12 and transmits it to the image format converter 14 as indicated by dashed lined arrows in Fig. 6 to convert the image format.
In the image format converter 14, based on the information selected by the operation on the operation panel 20, the printer controller 11 sets the resolution that is to be converted by the resolution converter 122, to 300 bpi. The printer controller 11 also sets the general format that is to be converted by the general format converter, to JPEG format.

Then, the image format is converted according to the image data that is transmitted from the printer controller 11.

In other words, the expander 121 expands that image data (compressed data) and the resolution of the expanded image data is converted to the resolution (in this example to 300 bpi) that is set in advance by the resolution converter 122. The image data that is subjected to the resolution conversion is subjected to $\gamma$ correction based on the $\gamma$ correction data that is set in advance, Further, the image data subjected to the $\gamma$ correction is subjected to color correction by the color correction section 124. The general format processor 125 converts the format of the image data subjected to color correction to a general format (in this example to JPEG format).

The image data subjected to image format conversion (image processing) by the image format converter 14 is transmitted to the NIC 15 through a path indicated by dashed line arrows in Fig. 6 and then transmitted to the PC 30 or other external unit in the network.

User C presses a transmission button on the operation panel 20 and selects resolution of 100 bpi. User C also selects higher $\gamma$ density and BMP format. This requirement signal is transmitted to the printer controller 11. The printer controller 11 receives the user B's requirement signal and transfers the image data stored in the HDD 13 to the semiconductor memory 12 and transmits it to the image format converter to cause to convert the image format.

In the image format converter 14, based on the information selected by the operation on the operation panel 20, the printer controller 11 sets the resolution that is to be converted by the resolution converter 122, to 100 bpi, The printer controller 11 also sets higher density that is to be used for $\gamma$ correction by the $\gamma$ correction section 123 and the general format that is to be converted by the general format converter, to BMP format. Then, the image format is converted according to the image data that is transmitted from the printer controller 11.

In other words, the expandor 121 expands the image data (compressed data) and the resolution of the expanded image data is converted to the resolution (in this example to 100 bpi) that is set in advance by the resolution converter 122. The image data that is subjected to the resolution conversion is subjected to $\gamma$ correction based on the $\gamma$ correction data that is set in advance (in this example, the $\gamma$ correction is performed to achieve higher density), Further, the image data subjected to the $\gamma$ correction is subjected to color correction by the color correction section 124. The general format processor 125 converts the format of the image data subjected to color correction to a general format (in this example to BMP format).

In the second embodiment, the CPU in the printer controller 11 is operated according to the program in the present invention that stored in the ROM or the HDD 13. Therefore, the CPU can function as the transmission section, the resolution setting section, the $\gamma$ correction setting section, and the format setting section.

According to the second embodiment, the following effect, in addition to that of the first embodiment is achieved.

In the HDD 13, if the reader (scanner) 1 reads the image on the document with 600 dpi, the image data of CMYK colors that is read with 600 dpi is stored. However, for transmitting the image data with 600 dpi, the size of the data is large. In such case, converting the image data to low resolution like 100 dpi or 200 dpi is to be taken into account. However, different users have different requirements. Some users wish to have a good quality image even if the data size is large, some wish to transmit with higher or lower density of the image, some wish to transmit in JPEG format, and some with to transmit in BMP format etc.

According to the second embodiment, it is possible to select resolution, $\gamma$ correction table (density of $\gamma$), general format (or special format) voluntarily to meet the various requirements of users. This enables to have a transmission image that meets user's requirement.

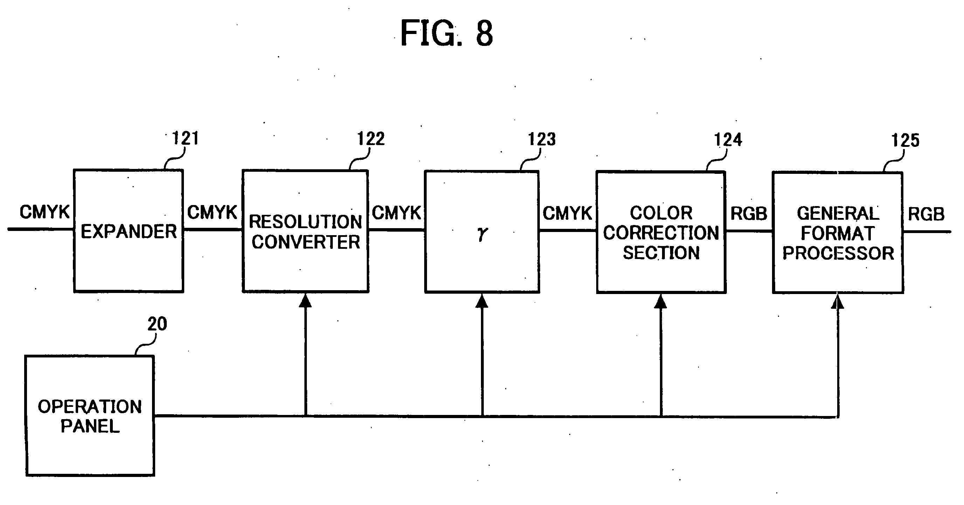

Fig. 8 is a diagram of other connections of various components of the image format converter 14 with an operation panel 20 in Fig. 6 in a third embodiment according to the present invention.

In the third embodiment, unlike in the second embodiment (Fig. 6), the printer controller 11 can set the image quality mode of the image data that is to be stored in the semiconductor memory 12 or the HDD 13 to variable image quality mode based on a requirement generated by an operation by the user on the operation panel 20 (or may be an operation of an external unit like the PC 30 by the user),
Corresponding to the image quality mode that is set by the color correction section 124 in the image format converter 14, the printer controller switches the color correction parameters (color conversion parameters) that convert the image data from CMYK colors to RGB colors. This is not the case in the second embodiment.

In this case, due to the meterism effect resulting from the difference in the spectrum sensitivity of the reader (scanner) 1 and human eye, even though it is the same color in the document to be printed and the print colorimetrically, the image data of RGB colors (RGB signal) that is input from the reader 1, sometimes is deviated a lot, As a result, it is not possible to match the hue of all documents and even if the hue of the document to be printed is matched, the hue of the prints does not match.

To solve such problem, the printer controller 11 sets the picture quality of the image data to be stored in the semiconductor memory 12 or the HDD 13 to a variable picture quality mode based on a requirement signal generated by an operation by the user on the operation panel 20. The printer controller 11 switches the color correction parameters of the color correction section corresponding to the image quality mode.

This enables the color conversion (color interpolation) that suits the image quality mode thereby matching the hue and a high quality image can be obtained.

A color correction unit, a method of color controlling, and a color controlling unit are widely known and disclosed in Japan Patent Application Laid Open Publication No, Hei9-107484.

In the third embodiment, the CPU in the printer controller operate according to the program in the present invention that is stored in the ROM or the HDD 13. Therefore, the CPU can perform the functions such as that of the communicating section, the resolution setting section, the γ correction data setting section, the format setting section, the image mode setting section, and the color correction parameter switching section,

However, the image format converter 14 is a special hardware that accelerates the processing, But to improve the generality, the function of each element of the image format converter 14 may be such that it is structured by a programmable processor. Or, the CPU of the printer controller 11 or another PCU may be caused to execute a predetermined program to perform the functions of each component of the image format converter 14.

In this case, the program in this invention (a program to perform function of each component of the image format converter 14 and a program to perform a function of transmission) may be recorded (stored) in the ROM or HDD 13 of the printer controller 11 and can also be provided by recording in a separate memory like ROM etc, which is a recording medium.

The program may also be provided by recording in a separate non-volatile recording medium (memory) like a static random access memory (hereinafter, "SRAM"), a memory card, an optical disc (like CD-ROM etc.). In this case, a recording medium reader (optical disc unit etc.) that includes a unit to set in the non-volatile recording medium can be included or installed externally in the digital copying machine. By setting in the non-volatile recording medium in the recording medium reader, the program recorded in the non-volatile recording medium is read and installed in the HDD 13 thereby performing the function in this invention, If the non-volatile recording unit enables to rewrite the memory that is stored in the program in the present invention, the program updating according to the development in the technology becomes easier.

Moreover, it is also possible to connect to a network that is connected to the NIC 15 and to download the program in the present invention from an external unit that includes a recording medium in which the program in the present invention is recorded and execute the program.

The embodiments that are applied in the image processing unit in the present invention used in the digital copying machine are explained above. However, the present invention is not restricted to the digital copying machine only and can also be applied in an image processing apparatus that is used in an image forming unit or a scanner like a digital compound machine (combination of a copying machine, facsimile etc.), FAX etc.

Following is the explanation of the fourth embodiment of the present invention. The present embodiment is applied in a digital color copying machine as an image processing apparatus that is a compound machine in which the functions of copying, facsimile, printing, and transmitting of input image (an image that is input by a reading of a document or by printing or by facsimile function).

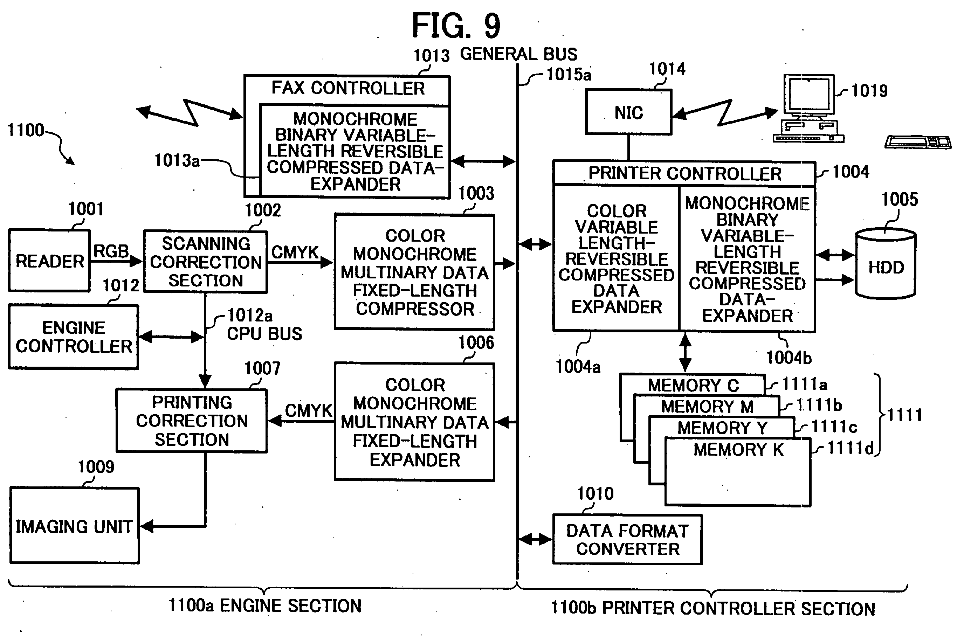

Fig. 9 is a schematic block diagram of a system structure of a digital color copying machine 1100 in the present embodiment. The digital color copying machine 1100 in Fig. 9 includes an engine section 1100a and a printer controller section 1100b. Each component of the engine section 1100a is controlled by an engine controller 1012 and each component of the printer controller section 1100b is controlled a printer controller 1004.

The digital color copying machine 1100 also includes a FAX controller 1013 in the engine section 1100a. The FAX controller 1013 controls the FAX function of the digital color copying machine 1100 and transmits and receives image data from and to a predetermined network like a public switched telephone network (hereinafter, "PSTN"). The digital color copying machine 1100 performs an image data transmitting function combined with other functions of copying, FAX, printing by operations of the engine section 1100a and the printer controller section 1100b.

The digital color copying machine 1100 includes a reader 1001, a scanning correction section 1002, a color monochrome multinary data fixed-length compressor 1003, and an HDD 1005 as components used in copying, The reader 1001 is an image reading unit that reads a document as color image data. The scanning correction section 1002 processes an image based on image data that is read by the reader 1001. The color monochrome multinary data fixed-length compressor 1003 compresses data output from the scanning correction section 1002. The HDD 1005 is a storage unit that stores the expanded data.

Further, the digital color copying machine 1100 includes a FAX controller 1013 that connects to the PSTN and controls the transmission and reception of the FAX signal, as a component used in FAX function. The FAX controller 1013 includes a monochrome binary variable-length reversible compressed data-expandor that transforms the expanded FAX data that is received into the original data.

Moreover, the digital color copying machine 1100 includes an NIC 1014 as a component used in printing function, for communicating with an external PC 1019 that is an external unit connected to a network like LAN. Furthermore, the digital color copying machine 1100 includes a printer controller 1004 as that performs raster image processing (RIP) according to a printing command from the external PC 1019 through the NIC 1014 and performs special compression for data after the RIP.

The digital color copying machine 1100 also includes a data format converter 1010 (explained in detail in the latter part) as a component used in transmission of image data. The data format converter 1010 converts the data that is generated while using the transmission function and is stored in the HDD 1005, such that it is suitable for use in a terminal to be used when these functions are used.

In a case of taking a printing output (image formation process) with image data that is generated by using these functions, the compressed data stored in the HDD 1005 is used. Therefore, the digital color copying machine 1100 has a color monochrome multinary data fixed-length expandor 1006 that can transform the compressed data to its original data form. The printer controller 1004 of the digital color copying machine 1100 includes a monochrome binary variable-length reversible compressed data-expandor and color variable-length reversible compressed data-expandor. These two expandors transform the compressed data to its original data form while the FAX and printing functions are performed.

The engine section 1100a includes a printing correction section 1007 that corrects the expanded data and an imaging unit 1009 that is a printer engine, as units to perform image formation. The imaging unit 1009 forms an image on a medium like a transfer paper and outputs it. Various printing methods can be used for the imaging unit 1009 apart from electrophotography like ink-jet printing, thermal sublimation transferring, silver halide photography, direct thermal recording, and hot melt thermal transferring.

The printer controller 1004 is formed by a micro computer that includes a CPU, a ROM, and a semiconductor memory 1011. The CPU carries out centralized controls of each component. The ROM is a storage medium that includes fixed data of start up program etc. written in it that is executed by the CPU. The semiconductor memory 1011 is a RAM that writes variable data like work data such that it can be renewed.

The HDD 1005 has an application program that is to be executed by the CPU, stored in it. In other words, when the user puts the power supply ON, the CPU starts a start up program in the ROM. The HDD 1005 causes the semiconductor memory 1011 to read the application program and the application program is started up. Due to the operation of the CPU according to the application program, the printer controller 1004 controls the operation of the overall printer controller section 1100b. The application program that is stored in the HDD 1005 is recorded in a magnetic medium like a floppy disc (hereinafter, "FD") or an optical information recording medium like a CD-ROM and DVD-ROM. The application program that is recorded in such a media is then installed in the HDD 5. Therefore, a storing medium like the optical information recording medium e.g. CD-ROM or a magnetic medium e.g. FD can also store the application program. The application program may also be fetched externally through the network and installed in the HDD 1005.

Following is the detailed explanation of each function (copying, printing, FAX, image data transmission) and each of these operations of the digital color copying machine 1100.

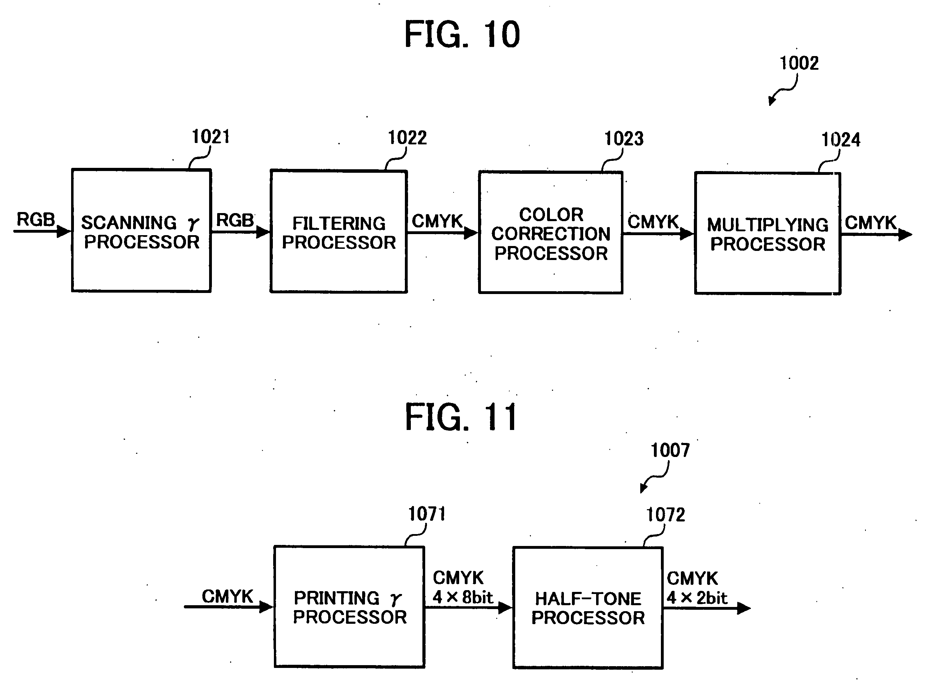

To start with, following is the explanation of processing performed while using the copying function. A reader 1001 reads a document that is set on the exposure glass and data of color separation separated into R, G, and B (R: red, G: green, and B: blue) is transmitted to the scanning correction section 1002. Fig. 10 is a block diagram of an internal structure of the scanning correction section.

As is shown in Fig. 10, the scanning correction section 1002 includes a scanning $\gamma$ processor 1021, a filtering processor 1022, a color correction (conversion) processor 1023, and a multiplying processor 1024. The scanning $\gamma$ processor 1021 performs the scanning $\gamma$ processing and the filtering processor 1022 performs filtering. The color correction (conversion) processor 1023 performs color correction (conversion) and the multiplying processor 1024 performs multiplication, The color correction processor 1023 converts the color signals of a scanner RGB image into an image data of four colors of C, M, Y, and K (C: cyan, M: Magenta, Y: yellow, and K: black). Color data of eight bits for each color of C, M, Y, and K after the multiplication is compressed by the color monochrome multinary fixed-length compressor 1003 and then converted into color data of two bits for each color.

The CMYK image data (color-binary image data) that is compressed by the color monochrome multinary data fixed-length compressor 1003 is transmitted to the printer controller 1004 through a general bus I/F 1015. The printer controller 1004 has a separate semiconductor memories 1011a, 1011b, 1011c, and 1011d for each of C, M, Y, and K colors respectively. The transmitted data is stored in these memories, Since the resolution of the scan image in the present embodiment is 600 dpi, the storage resolution during copying is 600 dpi. The stored data is written in the HDD 1005 whenever necessary. The reason for storing in the HDD 1005 is to avoid rereading of a document in a case of jamming of a paper during printing and not completing the printing as expected to be completed normally. Another reason is for performing the electronic sorting, In recent years, apart from these two reasons, the data is stored in the HDD 1005 to store the document that is read and perform a re-output function and in the present embodiment the data can be used in such a copy server function. in other words, the HDD 1005 is performing as image storage.

In any of these cases, the print out is performed by using the data stored in the HDD 1005. Therefore, in a case of taking a print out, the compressed data of CMYK (color-binary image data) in the HDD 1005 is transferred once to the semiconductor memory 1011. Then the data is transmitted to the engine section 1100a through the general bus 1015. The data is converted once again to image data of eight bits of CMYK by the color monochrome multinary data fixed-value expandor in the engine section 1100a.

The expanded data is transmitted to the printer correction section 1007. Fig, 11 is a block diagram of an internal structure of the printing correction section 1007. As is shown in Fig, 11, the printing correction section 1007 includes a printing γ processor 1071 and a half-tone processor 1072. In the printing γ processor 1071, printing γ correction of each color of CMYK is performed. In the half-tone processor 1072, half-tone processing to suit the imaging unit 1009 in the subsequent stage is performed and the data is transmitted to be used in the imaging unit 1009. As a result, an image based on this data is output on the transfer paper.

The copying operation for a color copy is explained above. A copying operation for a monochrome copy can also be performed in the digital color copying machine 1100. In the case of the copying operation for the monochrome copy, the color correction section 1023 in the scanning correction section 1002 (Fig. 10) converts a scan RGB image to a grey scale image of eight bits. This converted image data is compressed in the color monochrome multinary data fixed-length compressor 1003. The compressed image data is transmitted to the printer controller 1004 side through the general bus 1015 and stored in the memory 1011d for K. A compressed grey scale image of K is stored in the HDD 1005.

Following is the explanation of processing during use of the printing function. The printing function operates when there is a print requirement signal from the external PC 1019 that is connected through the NIC 1014. Since the existing unit can be applied for the operation of the printer controller, it is not explained in detail. However, a raster image processing (hereinafter, "RIP") image that is used as drawing data (rendering data) in the engine section 1100a according to the print requirement signal received from the external PC 1019 is generated. The RIP image data in a case of color printing operation is data of low bits of about one to four bits for each of CMYK colors. The RIP image data in a case of monochrome printing operation is generated as data of one bit of only K.

Here, the CMYK or K image that is subjected to RIP is stored in the HDD 1005. Since the data size of the data subjected to the RIP is large, the data consumes very large memory when stored in the memory without compressing it. Therefore, when the copying function is used, the data is compressed and stored in the HDD 1005. The special variable-length reversible compressors (monochrome binary variable-length reversible compressed data-expandor and color variable-length reversible compressed data-expandor) in the printer controller 1004 for color and monochrome compress the data. Resolution of an input image during printing may be 300 dpi, 600 dpi, 1200 dpi etc.

When a print out requirement signal is transmitted by the external PC that is a client, to the digital color copying machine 1100, the following conversion of color-space is performed in a printer driver of the external PC 1019. In other words, the image data is a color-space specified as a color-space in the external unit PC 1019 (the output requirement may be image data of various data formats like RGB, sRGB, and CMYK) and is converted to device-dependent (depending on type of a device) CMYK color-space that depends on the digital color copying machine 1100.

In the printer controller 14 of the digital color copying machine 1100 that receives the color image data (color-binary image data) that is converted to CMYK together with the output requirement, half-tone processing of the image data is performed to convert it to low bit data of about one to four bits. After this, the RIP is performed. The data subjected to the RIP image processing (hereinafter, "RIP image data") is compressed one by one by a special compressor of printing function included in the printer controller 1004 and then stored in the HDD 1005. Thus, a print out is taken by the operation mentioned above based on the image data stored in the HDD 1005.

Thus, the color image data (color-binary image data) for which there is a print out requirement is stored and managed in the HDD 1005 thereby enabling to reuse the image data that is stored, Regarding the usage, the image data that is printed out previously is specified and acquired from the external PC 1019 that is a client. This data is viewed and edited. When there is a requirement of such usage, the digital color copying machine 1100 is equipped with the image data transmitting function that is explained below to cope with the requirement.

Following is the explanation of the FAX function. The FAX function operates when the FAX controller 1013 receives a FAX, Since the existing unit can be applied for the operation of the FAX controller, it is not explained in detail. However, the compressed FAX signal that is received is transformed by the monochrome binary variable-length reversible compressed data-expandor into the original data and an RIP image that is used as drawing data (rendering data) in the engine section is generated.

Here, the RIP image is stored in the HDDI 1005. Since the data size of the data subjected to the RIP is large, the data consumes very large memory when stored in the memory without compressing it. Therefore, this data is compressed and stored in the HDD 1005. The special variable-length reversible compressors in the printer controller 1004 compress the data similar to that while using the printing function. Resolution of an input image during receiving the FAX may be 200 dpi, 300 dpi, 400 dpi etc.

Thus, the HDD 1005 of the digital color copying machine 1100 contains data having different resolutions that is compressed in different formats.

The compression formats and the resolutions of the image data in the HDD gathered together are as shown in table 1.

Table 1

| Data format | Compression format | Resolution |
|---|---|---|
| copy (color) | multinary irreversible fixed-length compression | 600dpi |
| copy (monochrome) | multinary irreversible fixed-length compression (K) | 600dpi |
| printer (color) | reversible variable-length compression | 300, 600, 1200dpi |
| printer (monochrome) | binary reversible variable-length compression | 300, 600, 1200dpi |
| FAX | binary reversible variable-length compression | 200, 300, 400dpi |

When a print out is to be taken by using data that is generated by the copying function, the printing function, and the FAX function and stored in the HDD 1005, the data that is compressed for storing is to be expanded. For this, the copy image is expanded by the color monochrome multinary data fixed-length expandor 1006. In the case of the FAX function and the printing function, the data is expanded by the monochrome binary variable-length reversible compressed data-expandor and color variable-length reversible compressed data-expandor in the printer controller 1004. Then, the data is send to the engine section 1100a for imaging.

Thus, in a system where the input data is compressed and stored once in the HDD 1005 and then used, during the data transmitting function also, the stored data in the HDD 1005 is used to perform transmission output.

However, the image data stored in the HDD 1005 is of different types and in most of the cases, these are individual formats that depend on the equipment. When such stored data is in an individual format is transferred to the external PC 19. the supplied data is unsuitable for the unit in which it is to be used.

To overcome this, the digital color copying machine 1100 in the present embodiment is equipped with the following image data transmitting function. The digital copying machine 1100 converts the data format of the data to be transmitted to a format suitable to be used in a terminal to which it is to be transmitted (external PC 1019 in the present embodiment). Or, the digital color copying machine 1100 is equipped with a function of transmitting the data after converting the data format by providing a converter that can transmit the data in a format that is required by the external PC 1019.

Since the data stored in the HDD 1005 is the print out data, the data format conversion to convert the resolution and color-space of the image is required. This conversion enables to convert to a data format that enables to be viewed on the display in the external PC 1019.

For example, the external PC 1019 sets the data format of the image data that is to be transmitted from the digital color copying machine 1100. The image data of the data format that is set may be received (captured) by the digital color copying machine 1100. The transmission conditions (processing conditions) may be set in the operation section (operation panel) of the digital color copying machine 1100 and image data of the predetermined format may be transmitted to the external PC 1019.

Following is the explanation of data conversion when the image data generated by the copying function, the printing function, the FAX function and stored in the HDD 1005 is transmitted to a terminal where it is to be used (external PC 1019).

To start with, following is the explanation of conversion of image data when the print out requirement from the external PC 1019 is for color image data having a format that is different than the format of the color image data stored in the HDD 1005. In other words, this is the explanation of conversion when the color-binary image data of a color-space that is stored in the HDD 1005 is converted to color-multinary image data of another color-space and output to the external PC 1019.

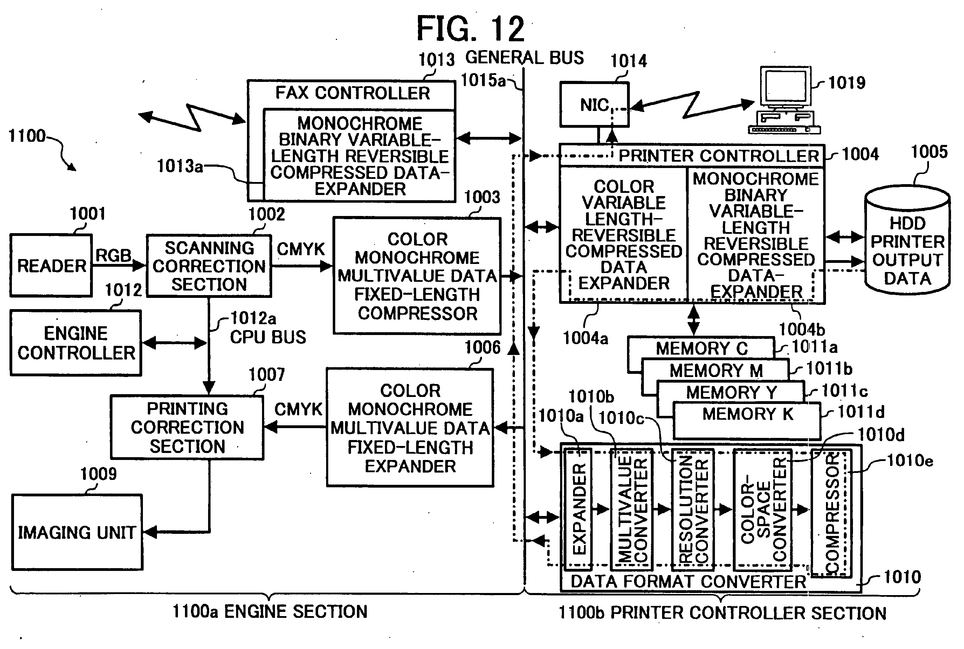

Fig. 12 is a block diagram of a data transmission flow represented by alternate long and short dashed lines when image data that is converted to color image data having a data format different than that of color image data is transmitted. A system in the digital color copying machine shown in Fig. 12, basically has an identical structure as that in Fig. 9. The flow of the transmitted data during image data transmitting function is represented by alternate long and short dashed lines and there are additional structural components inside the data format converter that convert the data format of the image data.

As is shown in Fig. 12, the data format converter 1010 includes an expander 1010a, a multinary converter 1010b, a resolution converter 1010c, a color-space converter 1010d, and a compressor 1010e. In the data converter 100, instructions from the printer controller 1004 are received and the expanding, multinary conversion, resolution conversion, color-space conversion, and compression are performed,

The expander 1010a expands the compressed image data that is stored in the HDD 1005. The expanded image data is then converted to multinary data in the multinary converter 1010b. The resolution of the image data is converted to a predetermined resolution in the resolution converter 1010c. The color-space of the image data is converted to a predetermined color-space in the color-space converter 1010d, The image data is subjected to compression-encoding in a predetermined compression-encoding format by the compressor 1010e and then transmitted to the external PC 1019.

Thus, the format of the color-binarized image data (image data of a first image format) stored in the HDD 1005 is converted and the image data is output as color-multinary image data (image data of a second image format). Thus, it functions like an image data transmitter. The resolution and the color-space are converted in the order of expansion → conversion to multinary data → resolution (dpi) conversion → color-space conversion → compression. Therefore, the data stored in the HDD 1005 for which there is a requirement of print out can be acquired and used for viewing and editing once again in a terminal like the external PC 1019 that is a client,

Following is the explanation of concrete structure of the data. format converter 1010.

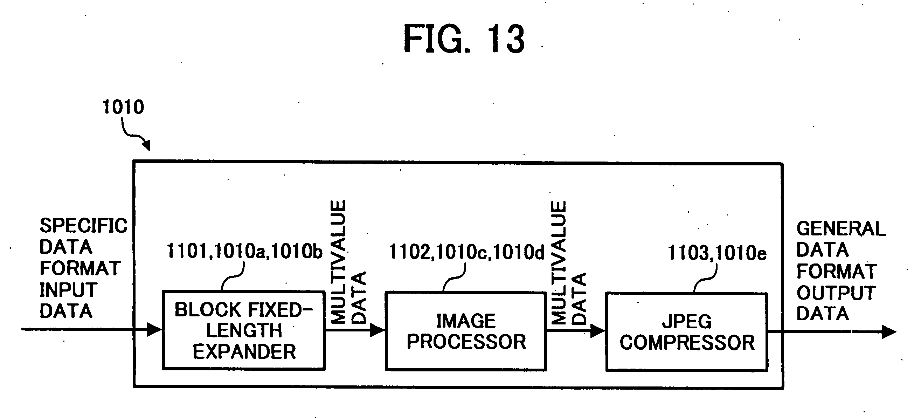

Fig. 13 is a block diagram of an example of a structure of the data format converter 1010. As is shown in Fig. 13, the data format converter 1010 includes a block fixed-length expandor 1101 on an input side and a JPEG compressor 1103 on an output side. The block fixed-length expandor 1101 includes an expander 1010a and a multinary converter 1010b. The JPEG compressor 1103 includes a compressor 1010e. The image processor 1102 in Fig, 13 (a structure equivalent to that of the resolution converter 1010c and the color-space converter 1010c) is equipped with the functions of resolution conversion and color-space conversion that are explained in brief in the latter part.

According to the structure in Fig. 13, in this example, the print out requirement data is multinary data and this data is compressed by multinary data compression of the block fixed-length. This compressed data is stored in the HDD 1005 as data having a special data format. Thus, at the time of transmission, the data having a special data format that is stored in the HDD 1005 is compressed by multinary compression and converted to multinary data having a general format. This data is output to the external PC 1019.

In this case the data in the special data format that is to be input to the data format converter 1010 is expanded by a special block fixed-length expansion in which the efficiency of compression or the efficiency of data processing is maintained, In the example, the general data format that is to be used on the output side is compressed by a standard JPEG compression. In this case, the special data format means a data format that is peculiar to the digital color copying machine 1100 and not a general data format like JPEG, JPEG 2000 that is commonly used in a normal PC etc.

The operation of data format conversion in the data format converter 1010 shown in Fig. 13 is as follows. Multinary data is compressed by a special block fixed-length compression and the compressed data is input to the data format converter 1010. Firstly, the data format converter 1010 expands the compressed data in the block fixed-length expander 1101 to perform predetermined processing in the image processor 1102. After the data is transformed into the original multinary data, the image processor 1102 performs image processing.

After the predetermined image processing by the image processor 1102, when the data is to be output to an external unit as transmission data, the JPEG compressor 1103 converts the data to the general data format and the converted data is output.

In the present embodiment, the format used for the data stored in the HDD 1005 being a special fixed-length compressed data format, the data management can be carried out by keeping the fluctuation in the compression efficiency due to the image data fixed (stabilized). Moreover, since the data is handled in units of blocks, data processing like the recovering and rearranging of data becomes easier, For block fixed-length encoding and decoding that is used in this embodiment, it is possible to apply the known technology (like technology disclosed in e.g. Japan Patent Application Laid Open Publication No. H11-331844).

By transmitting the data in a general data format like JPEG that is standardized, it is possible to standardize a data format (to have a common data format) in a unit to which the data is transmitted. This also enables to build a data format conversion system in which both the quality of data and the efficiency of data transmission are maintained.

When binary data stored in the HDD 1005 is subjected to transmission, general standard compression and expansion formats like Modified Huffman (MH) format, Modified Read (MR) format / Modified MR (MMR) format etc. can be used.

Following is the explanation of conversion of data format by the multinary converter 1010b shown in Fig. 12. When the multinary converter 1010b transmits the binary print out data that is stored in the HDD 1005 as the image data, a conversion that converts the gradation from m value data to n value data (where n>m) by the multinary conversion function, is used. Due to this, the data can be used in a terminal like the external PC 1019.

As an example, when the image data is binary data, a case of using conversion to convert the gradation to 256 value data by the multinary conversion function, is explained further. Equation 1 is an operation expression to be used in multinary conversion. output 256 value data

$$[i, j] = \frac{1}{256} \sum_{x=3}^{3} \sum_{y=3}^{3} (\text{filtering coefficient} \{x, y\} \times \text{pixel data} [i + x, j + y]) \ldots (1)$$

$$\text{filtering coefficient} [x, y] = \begin{bmatrix} 1 & 2 & 3 & 4 & 3 & 2 & 1 \\ 2 & 3 & 7 & 8 & 7 & 4 & 2 \\ 3 & 7 & 9 & 11 & 9 & 7 & 3 \\ 2 & 3 & 7 & 8 & 7 & 4 & 2 \\ 1 & 2 & 3 & 4 & 3 & 2 & 1 \end{bmatrix}$$

When the image data that is to be transmitted is binary data, by referring to a pixel around (within a two-dimensional matrix) target pixel data of one bit, filtering by space filter that is indicated in equation 1 is performed. When the value of one bit data is zero, it is converted to eight bit data as $0 \times 00$. When the value of one bit data is one, it is converted to $0 \times FF$. Then filtering operation is performed based on operation expression of equation 1 and a filtering (matrix) coefficient added to equation 1. By performing this operation (calculation), the target pixel data can be converted from binary data to 256 value data.

Moreover, even when data is less than eight bits (256 values) like two bits, four bits, three bits etc., it is converted to eight bits by space filtering for smoothing.

Following is the explanation of data format conversion by the resolution converter 1010c.

When the resolution of the print out data that is stored in the HDD 1005 is different than the resolution that is required to be in a terminal to which the data is transmitted, the resolution converter 1010c converts the resolution of the image data to be transmitted to a specified value. Thus, the data can be used in a terminal like the external unit PC 1019.

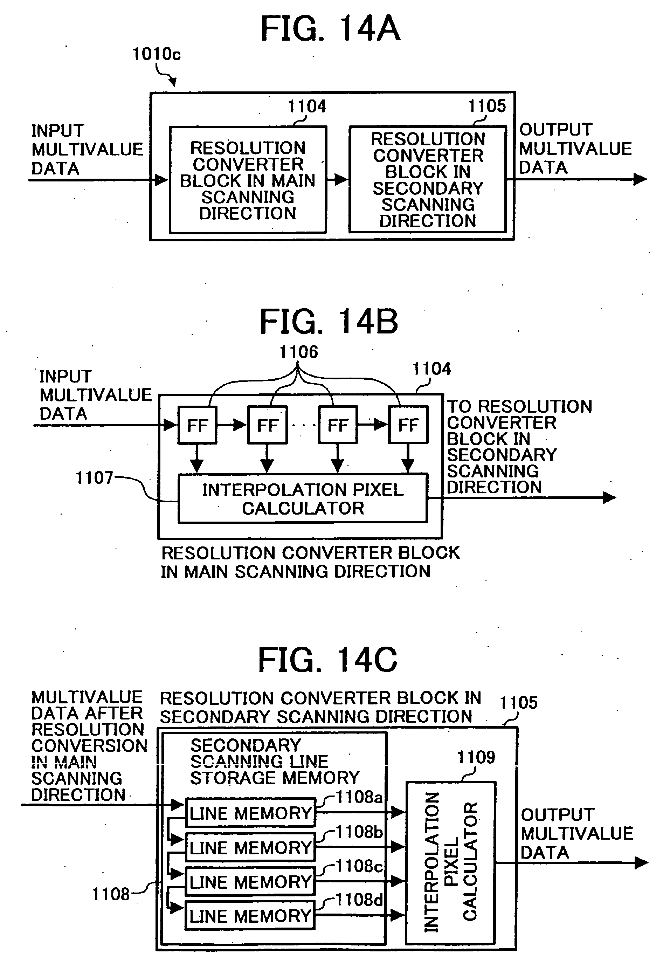

Fig. 14A, Fig. 14B, and Fig. 14C are illustrations of the resolution conversion function. As is shown in Fig. 14A, the resolution converter 1010c includes a resolution converter block 1104 in a main scanning direction on an input side and a resolution converter block 1105 in a secondary scanning direction on an output side. The resolution converter block 1104 in the main scanning direction includes FF 1106 for main scanning pixels and an interpolation pixel calculator 1107 as shown in Fig. 14B. The resolution converter block 1105 in the secondary scanning direction includes secondary scanning line-storage memory 1108 for predetermined lines and an interpolation pixel calculator 1109 as shown in Fig, 14C. Figs. 14A, 14B, and 14C illustrate a case when the pixel data to be converted is multinary data and a conversion that enables to convert to any desired resolution in the main scanning direction and the secondary scanning direction is used.

The operation of the resolution converter shown in Figs. 14A, 14B, and 14C is as follows. The interpolation pixel calculator 1107 in the resolution converter block 1104 interpolates pixels of the multinary data that is input to the resolution converter 1010c, in the main scanning direction to convert the input multinary data such that the data number is in accordance with that of the specified resolution (dpi). In this case, generally used nearest neighboring pixel substitution, taking weighted average (mean) of two adjacent pixels, and cubic function convolution etc. can be applied for calculating the pixel data value to be interpolated.

After the resolution conversion in the main scanning direction, the resolution converter block 1105 in the secondary scanning direction processes the multinary data in the main scanning direction as follows. The resolution converter block 1105 in the secondary scanning direction modifies data of one line for which the resolution is converted in the main scanning direction and stores this modified data that is converted in the main scanning direction in a secondary scanning line memory 1108 that has a plurality of lines of memory capable of storing the data. The interpolation pixel calculator 1109 calculates the data value of lines to be interpolated based on reference pixel data in the secondary scanning direction that is stored in the secondary scanning line memory 1108. In this case, similarly as in the main scanning direction, the nearest neighboring pixel substitution, taking weighted average (mean) of two adjacent pixels, and cubic function convolution etc. can be applied for calculation,

Following is the explanation of the conversion of a data format by the color-space converter 1010d. When the color-space of color image data that is stored in the HDD 1005 is different than the color-space that is required to be in a terminal to which the data is transmitted, the color-space converter 1010d converts the color-space of the image data to be transmitted to a specified value. Thus, the data can be used in a terminal like the external unit PC 1019.

In the digital color copying machine 1100 of the present embodiment, the image stored in the HDD 1005 is image data of print out and is stored as CMYK [a device-dependent color-space (a color-space that depends on a type of device)] that depends on characteristics of the printer. Therefore, while transmitting the data to the external PC 1019 etc., it is converted from a color-space that depends on a printer to a standard color-space like sRGB or lab etc. [a device-dependent color-space (a color-space that depends on a type of device)]. Thus, the data format is converted to a format that can be used in a terminal (external PC 1019).

As an embodiment of the color-space conversion, an example of color-space conversion by table interpolation which is a known technology, is given below.

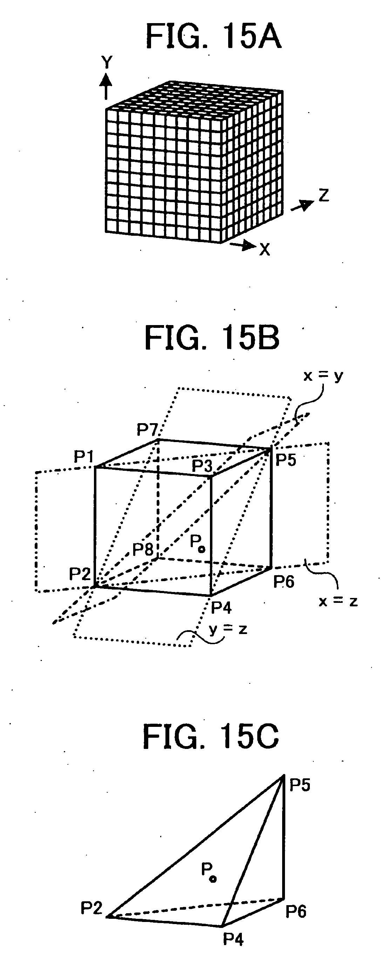

In a Look up Table (hereinafter, "LUT") that is used in the table interpolation, each axis of an input color-space is divided into eight parts. The input color-space is divided into high order and low order, The LUT is referred to in the high order color-space and three-dimensional interpolation is performed in the low order color-space to obtain a precise output, There are various types (kinds) of the three dimensional interpolation. An example of tetrahedral interpolation that is the simplest one of the linear interpolation is given below. Fig. 15A, Fig. 15B, and Fig. 15C are illustrations of a table interpolation. Fig. 15A represents input color-space in xyz cubicle (three dimensional) coordinate axes. Fig. 15B illustrates division of the input color-space into an interpolation unit cube (tetrahedron). Fig. 15C illustrates a divided tetrahedron.

In the tetrahedral interpolation, the input color-space is divided into a plurality of unit cubes (Fig. 15A). These cubes are further divided into six tetrahedrons that have common axis of symmetry of the unit cube (Fig, 15B), Parameters (hereinafter, "lattice point parameters") of division boundary point (i.e. lattice points from P1 to P8) of the unit tetrahedron that is selected from the higher coordinates of the input color signal are referred to from the LUT. Then, linear operation is performed using the lattice point parameters of the unit tetrahedron (Fig. 15C) that are selected from the lower coordinates, thereby obtaining an output value.

Following is the procedure for color conversion by using the table interpolation

1. Select a unit cube that involves an input color signal X (x, y, z).
2. Find lower coordinates ($\square$x, $\square$y, $\square$z) of coordinate P in the unit cube that is selected. Here, symbol $\square$ means length of a side of a unit cube.
3. Select unit tetrahedrons by comparing the size of the lower coordinates and perform linear interpolation for each of the unit tetrahedron. Find the output value POUT at the coordinate P. The value of linear interpolation of each unit tetrahedron is given by the following equation (2),

$$(\square x < \square y < \square z)\ P_{out} = P2 + (P5\text{-}P7) \times \square x/\square + (P7\text{-}P8) \times \square y/\square$$
$$+ (P8\text{-}P2) \times z/\square$$

$$(\square y \leq \square x < \square z)\ P_{out} = P2 + (P6\text{-}P8) \times \square x/\square + (P5\text{-}P6) \times \square y/\square$$
$$+ (P8\text{-}P2) \times \square z/\square$$

$$(\square y < \square z \leq \square x)\ P_{out} = P2 + (P4\text{-}P2) \times \square x/\square + (P5\text{-}P6) \times \square y/\square$$
$$+ (P6\text{-}P4) \times \square z/\square$$

$$(\square z \leq \square y \leq \square x)\ P_{out} = P2 + (P4\text{-}P2) \times \square x/\square + (P3\text{-}P4) \times \square y/\square$$
$$+ (P5\text{-}P3) \times \square z/\square$$

$$(\square z \leq \square x < \square y)\ P_{out} = P2 + (P3\text{-}P1) \times \square x/\square + (P1\text{-}P2) \times \square y/\square$$
$$+ (P5\text{-}P3) \times \square z/\square$$

$$(\Delta x < \Delta z \leq \Delta y)\ P_{out} = P2 + (P5-P7) \times \Delta x/\Delta + (P1-P1) \times \Delta y/\Delta$$

$$+ (P7-P1) \times \Delta z/\Delta \qquad \ldots (2)$$

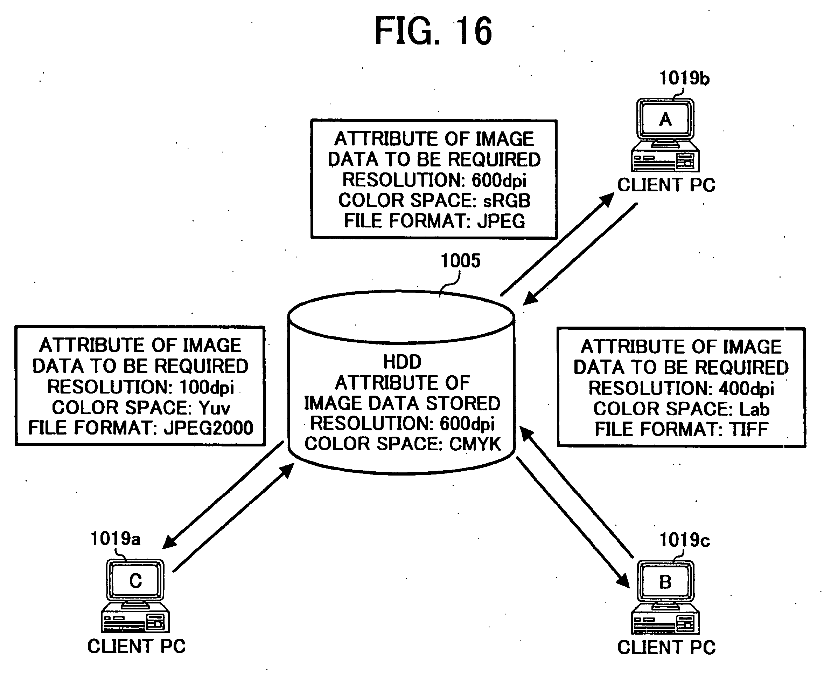

The processing in a case of outputting image data to the external PC 1019 etc. is explained below while referring to Fig. 16. It is explained above that when image data that is stored in the HDD 1005 is to be transmitted, the resolution, color-space, data format can be converted to specified resolution, color-space, and data format. An example in which the conversion parameters that are specified are standard color-space, general data format that are generally used in the external PC 1019 to which the data is transmitted, is explained above. However, there are clients that do not require general data form. Therefore, in the present embodiment, for such clients (receiver of transmitted data) conversion parameters can be set to achieve image data form that is required by the client so that the image of a data form according to the requirement signal that is transmitted can be received by the client (receiver of transmitted data).

As is shown in Fig. 16. the external PC 1019 that is a client determines attributes for receiving (capturing) image data from the digital color copying machine 1100. The external PC 1019 displays these attributes and transmits a requirement signal for image data to the digital color copying machine 1100. The image data parameter values of the data format converter 1010 are determined by an image capturing requirement signal from the external PC 1019 and attributes of the image data that is stored in the HDD 1005.

These parameter values change the setting values of parameters of the expander 1010a, the multinary converter 1010b, the resolution converter 1010c, the color-space converter 1010d, and the compressor 1010e of the data format converter 1010 shown in Fig. 12. Further, in the data format converter 1010, image processing in accordance with the changed setting-parameters is performed and the processed image data is transmitted to the external PC 1019 from where there was a requirement.

Thus, the image data stored in the HDD 1005 is image data of a color-space (color-binary image data) that is input as color printer image data (input by scan input of a document, or input by a printer function or a FAX function).

In this case, as is shown in Fig. 16, the image data stored in the HDD 1005 is assumed to be CMYK image data having resolution of 600 dpi. In each external PC 1019 that is a client in Fig. 16, the attributes of the image data are assumed to be set such that

client A: image having a resolution of 200 dpi, sRGB space, and JPEG format
client B: image having a resolution of 400 dpi, lab space, and TIFF format
client C: image having a resolution of 100 dpi, Yuv space, and JPEG 2000 format
and a requirement signal for reception (capturing) has been sent.

In this case, in the data format converter 1010, requirement signals from respective clients are received and image processing is performed by setting processing conditions (parameters) in accordance with the requirement signal.

In this example, the value of resolution conversion parameter that is used for resolution conversion in the resolution converter 1010c in the data format converter 1010 (see Fig. 12) is determined by the requirement of resolution from the client and resolution of the image data that is stored in the HDD 1005. The resolution is converted from 600 dpi to 200 dpi for client A, from 600 dpi to 400 dpi for client B, and from 600 dpi to 100 dpi for client C.

In the next color-space converter 1010d, the color-space is converted from CMYK to sRGB for client A, from CMYK to Lab for client B, and from CMYK to Yuv for client C.

In the compressor 1010e, the file format is converted to JPEG format for client A, to TIFF format for client B, and to JPEG 2000 format for client C.

Following is the explanation of image data conversion when the attributes of the image data for which there is a requirement for transmission from the external PC 1019, is not color image data that is stored in the HDD 1005 but monochrome data. In other words, this is a case in which color-binary image data that is stored in the HDD 1005 is converted to monochrome image data (binary or multinary) and output to the external PC 1019.

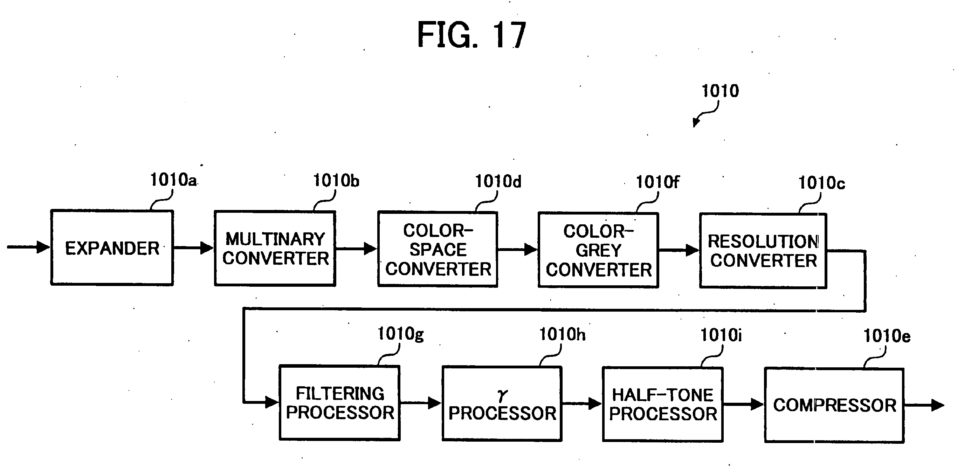

Fig. 17 is a block diagram of the data format converter during conversion of color-binary image data to monochrome image data. As is shown in Fig, 17, a data format converter 1010 that converts the format of the image data that is to be transmitted, includes a color-grey converter 1010f, a filtering processor 1010g, a γ processor 1010h, and a half-tone processor 1010i in addition to the expandor 1010a, the multinary converter 1010b, the resolution converter 1010c, the color-space converter 1010d, and the compressor 1010e. These components perform image processing.

The expander 1010a expands compressed image data that is stored in the HDD 1005. The expanded image data is converted to multinary data in the multinary converter 1010b. The color-space converter 1010d converts the color-space of the data to a predetermined color-space. After the color-space conversion of the data, the color-grey converter 1010f converts the data to monochrome multinary image data, Further, the resolution converter 1010c converts the resolution of the monochrome multinary image data to a predetermined resolution. The data subjected to the resolution conversion is then emphasized and smoothened in the filtering processor 1010g. Then, the γ processor 1010h adjusts density of image and the half-tone processor 1010i performs half-tone processing (binarizing). The image data subjected to half-tone processing is subjected to compression-encoding in a predetermined compressing encoding format by the compressor 1010e. This processed image data is then transmitted to the external PC 1019. Thus, the format of the color-binary image data (image data of a first format) that is stored in the HDD 1005 is changed and the image data is output as monochrome binary image data (image data of a second format). Here, the image data transmitter is formed. In other words, the resolution conversion and the color-space conversion is performed in the order of expansion → conversion to multinary data → color-space conversion → color-grey conversion →resolution (dpi) conversion → filtering → density $\gamma$ processing → half-tone processing → compression. Therefore, the color image data stored in the HDD 1005 for which there is a requirement of print out can be converted to monochrome image data, acquired by a terminal in which it is used like the external PC 1019 that is a client, and used for editing,

Following is the explanation of concrete structure of the data format converter 1010 in Fig. 17,

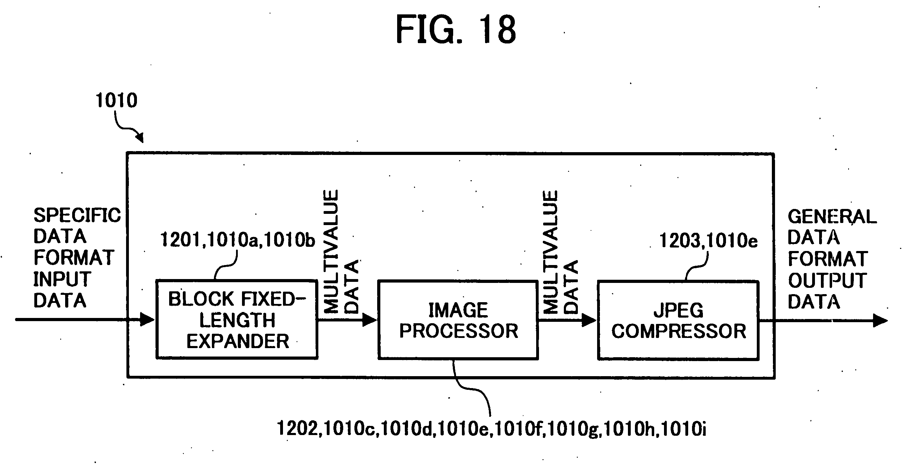

Fig, 18 is a block diagram of example of a structure of the data format converter 1010. As is shown in Fig. 18, the data format converter 1010 includes a block fixed-length expandor 1201 on an input side and a JPEG compressor 1203 on an output side. The block fixed-length expandor 1201 includes an expandor 1010a and a multinary converter 1010b. The JPEG compressor 1202 includes a compressor 1010e. The image processor 1202 in Fig. 18 (a structure equivalent to that of the resolution converter 1010c, the color-space converter 1010d, the color-grey converter 1010f, the filtering processor 1010g, the $\gamma$ processor 1010h, and the half-tone) is equipped with the functions of color-grey conversion, filtering, $\gamma$ processing, and half-tone processing in addition to the resolution conversion and the color-space conversion.

According to the structure in Fig, 18, in this example, the print out requirement data is binary image-data and this data is compressed by multinary data compression of the block fixed-length. This compressed data is stored in the HDD 1005 as data having a special data format. Thus, at the time of transmission, the data having a special data format that is stored in the HDD 1005 is compressed by multinary compression and converted to monochrome-image data having a general format, This monochrome-image data is output to the external PC 1019.

In this case, the data in the special data format is expanded by a special block fixed-length expansion in which the efficiency of compression or the efficiency of data processing is maintained. In the example, the general data format that is to be used on the output side is compressed by a standard JPEG compression, In this case, the special data format means a data format that is peculiar to the digital color copying machine 1100 and not a general format like JPEG, JPEG 2000 that are commonly used in a normal PC etc.

The operation of data format conversion in the data format converter 1010 shown in Fig, 18 is as follows, Color-binary image-data is compressed by a special block fixed-length compression and the compressed data is input to the data format converter 1010. In the data format converter 1010, the compressed data is expanded and transformed into the original multinary data in the block fixed-length expander 1201 to perform predetermined processing in the image processor 1202. After the data is transformed into the original multinary data, the image processor 1202 performs image processing of the data. After the predetermined image processing by the image processor 1202, when the data is to be output to an external unit as transmission data, the JPEG compressor 1203 converts the data to the general data format and the converted data is output. The format used for the data stored in the HDD 1005 being a special fixed-length compressed data format, the data management can be carried out by keeping the fluctuation in the compression efficiency due to the image data fixed (stabilized). Moreover, since the data is handled in units of blocks, data processing like the recovering and rearranging of data becomes easier. For block fixed-length encoding and decoding that is used in the present embodiment, it is possible to apply the known technology (like technology disclosed in e.g. Japan Patent Application Laid Open Publication No. Hei11-331844).

By transmitting the data in a general data format like JPEG that is standardized, it is possible to standardize a data format (to have a common data format) in a unit to which the data is transmitted. This also enables to build a data format conversion system in which both the quality of data and the efficiency of data transmission are maintained.

When binary data stored in the HDD 1005 is subjected to transmission, general standard compression and expansion formats like Modified Huffman (MH) format, Modified Read (MR) format / Modified MR (MMR) format etc. can be used.

Following is the explanation of function of each component of the data format converter 1010. The functions of the multinary converter 1010b, the resolution converter 1010c, and the color-space converter 1010d are explained earlier and hence omitted here,

Following is the explanation of conversion of data format by the color grey converter 1010f. The image data that is converted to RGB in the color-space converter 1010d is converted to monochrome image data in the color-grey converter 1010f according the equation (3).

$$\text{Grey}=(R+2G+B)/4 \qquad\qquad \cdots \quad (3)$$

Following is the explanation of conversion of data format by the filtering processor 1010g. Filtering causes to modulate a value of modulation transfer function (hereinafter, "MTF") of the image data. There are two cases viz, a case of emphasizing the image edge by raising the MTF value higher than the image data and a case of smoothing the image by lowering the MTF value.

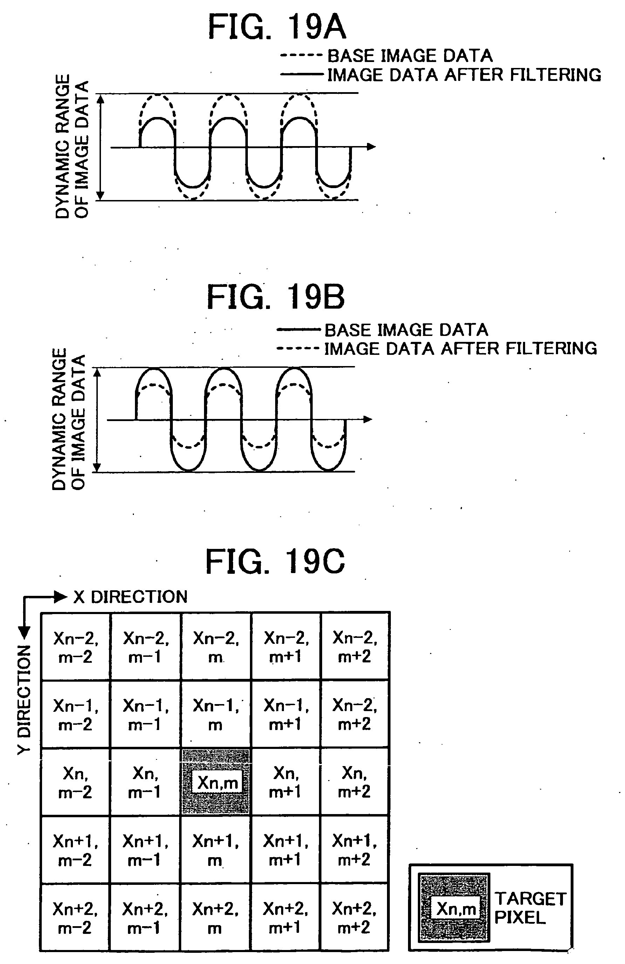

In a case of raising the MTF value of the image data, if the image frequency of the base image is represented by a continuous line and the image frequency after filtering is represented by a dashed line, it is necessary to perform a process that emphasizes upheavals (bumps) of the image frequency as shown in Fig. 19A. Here, the vertical axis represents dynamic range of image density and the horizontal axis represents raster form reference of the image data.

In a case of smoothing the MTF value of the image data, it is necessary to perform a process that makes the upheavals (bumps) of the image frequency smooth as shown in Fig. 19B. In the actual process, the raster form direction of the two dimensional image is assumed as a line direction (x direction) and the other direction is assumed as y direction. The image data is handled in units of lines and target pixel value is calculated based on pixel value of surrounding pixels.

Fig. 9C represents 5x5 pixels around target pixel as a center coded as target pixels $X_{n,m}$.

In a case of raising the MTF value of the image data, differential coefficient of the image frequency that is required to be emphasized, coefficient arranged in form of matrix (hereinafter, "matrix coefficient") with the resolution of the image as a basic tone are counted. When the matrix coefficient is coded as $A_{m-2,\,n-2}$, $A_{m-2,\,n-1}$, ... , $A_{m,\,n}$, $A_{m+2,\,n+1}$, $A_{m+2,\,n+2}$ in the same form as the surrounding pixels, the target pixel value Y after the filtering in the case of raising the MTF value of the image data can be expressed by the following operational expression.

$$B=(X_{m-2,\,n-2} \times A_{m-2,\,n-2})+(X_{m-2,\,n-1} \times A_{m-2,\,n-1})+\ldots$$
$$+ (X_{m+2,\,n+2} \times A_{m+2,\,n+2}) \qquad \ldots (4)$$

$$D=B \times C \qquad \ldots (5)$$

$$Y=D+X_{n,\,m} \qquad \ldots (6)$$

Equation (4) is an operation of product of matrices of the image data and matrix coefficient obtained by differential coefficient. The value of B obtained by this equation (4) is an emphasized component of the image due to filtering. Further, equation (5) causes amplification and reduction in the emphasized component as desired. The final value of target pixel is obtained by adding the value of emphasis due to filtering obtained by equation (5) to target pixel value [equation (6)]. Thus, the MTF value of the image data is raised by converting all the pixels of the image data by the operation mentioned above.

In a case of smoothing the image data, the target pixel and the pixel around the target pixel are added and then divided by a pixel number E and average value of the target pixel and the surrounding pixel is obtained. The image data is smoothed by converting all the pixels of the image data by performing the operation mentioned above. To adjust the amount of smoothing, rather that simply balancing the weight of the target pixels and the surrounding pixels as equivalent, if all the pixels are caused to have distance from each other, the target pixel value Y can be adjusted by substituting the matrix coefficient by any integer as shown in equation (7).

$$Y=(X_{m-2,\,n-2} \times A_{m-2,\,n-2}) + (X_{m-2,\,n-1} \times A_{m-2,\,n-1}) +\ldots$$
$$+ (X_{m+2,\,n+2} \times A_{m+2,\,n+2})/E \qquad \ldots (7)$$

By performing the following process, a filtering function can be performed to enable the modulation of MTF value of the multinary image data in the filtering processor 1010g. Due to this, if the original image is mainly a character image, the image quality is improved by emphasizing the MTF value. If the image is mainly a picture image, the image quality is improved by imparting smoothness by slight smoothing. Thus, a high quality image can be obtained by selecting a filtering coefficient suitable to the type of the image.

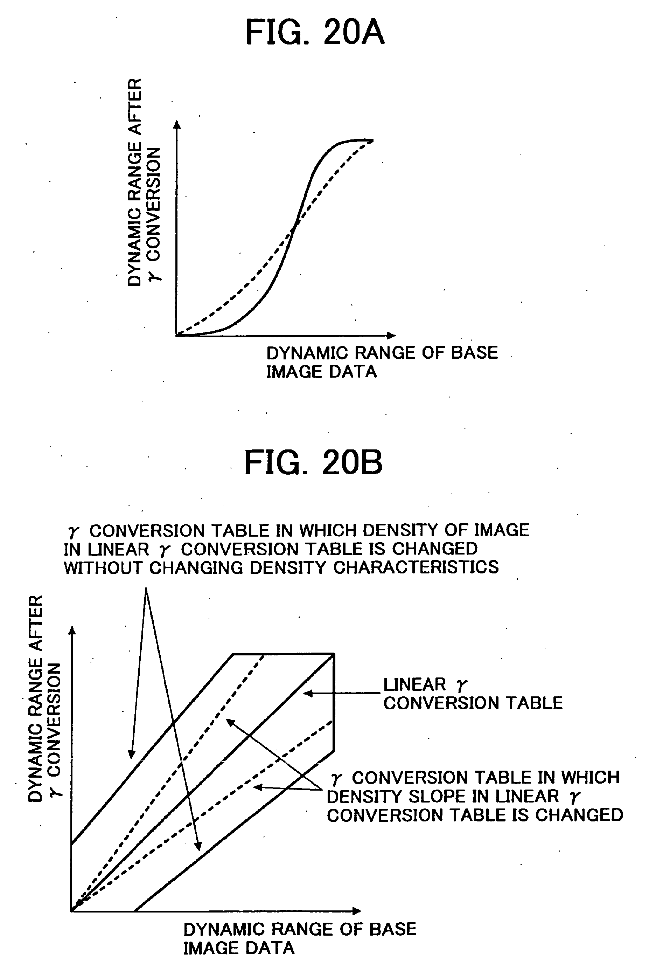

Following is the explanation of conversion of data by the $\gamma$ processor 1010h. The $\gamma$ processor 1010h varies the density slope and density characteristics of an image, If the continuous line in Fig, 20A is a γ conversion table, according to the graph shown in Fig. 20A, the value equivalent (corresponding) to the original image data (horizontal axis) is converted to a value of the image data (vertical axis) after γ conversion. Then, changing of the curve of the conversion table enables to change to the image data that has desired density distribution. For example, if the γ conversion table is made as shown by a dashed line in Fig. 20A, compared to the γ conversion table shown by the continuous line, the image data after the γ conversion can be converted to image data having a smooth density slope. In Fig. 20A, the density becomes higher in the direction of arrows.

Following is the explanation of a method for making the γ conversion table. For convenience, the method is explained by referring to an example in which a linear γ conversion table (continuous line) that extends in a direction of 45 degrees from the starting point shown in Fig. 20B is changed.

To raise and lower the overall density of the image without varying the density characteristics, the γ conversion table may be shifted in parallel like a table that is indicated by the dashed line in the horizontal direction of the graph as shown in Fig. 20B. To vary the density slope of the image, the inclination of the γ conversion table may be varied. Moreover, to vary the density characteristics, the curvature of the γ conversion table that is indicated by a continuous curved line in Fig. 20A may be varied, thereby obtaining the desired density characteristics.

Thus, a γ conversion function that enables to vary the density slope and the density characteristics of the multinary image data can be realized. Due to the realization of the γ conversion function, a high quality image can be obtained by selecting a γ curve that is suitable to the type of the image.

Following is the explanation of the conversion of the data format by the half-tone processor 1010i, The half-tone processor 1010i binarizes the multinary image data by performing half-tone processing of the data. The half-tone processing is a process in which the multinary image data is quantized to a binary gradation or a gradation close to this small value. There are various ways of performing the half-tone processing, Commonly used pure quantization, dithering, and random dithering are mentioned here, For convenience, the quantization gradation is assumed to be binary.

To start with; in pure quantization, gradation of the image data is changed to two with any desired value in the dynamic range of the multinary image data as a threshold value. For example. in a case of quantizing the multinary image data of 256 gradations having a dynamic range from 0 to 255, to a value of either 0 or 1, for a threshold value of 128, if the image data is 100 and the quantization value is 0, 200 then quantization value is 1.

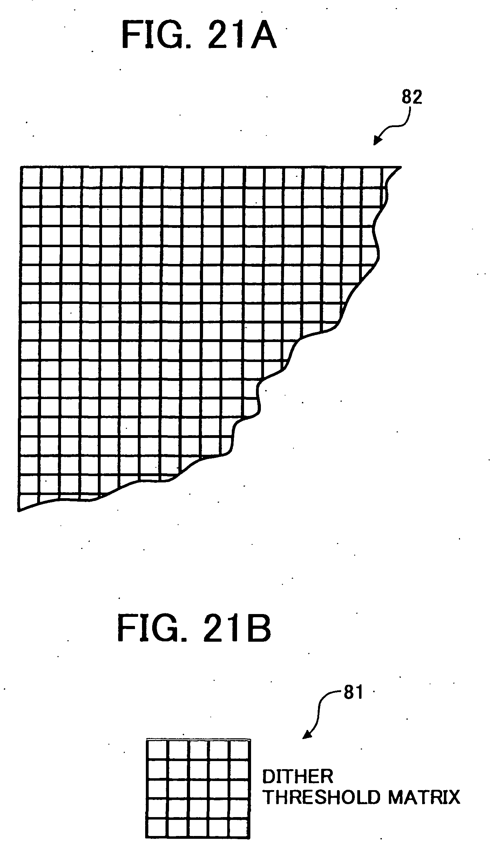

In dithering, as is shown in Fig. 21B, using a threshold value in the matrix form, the corresponding threshold matrix 1081 as one threshold value per pixel is applied on a tile of the image data 1082 as shown in Fig, 21A and the gradation is changed to two. The threshold value in the matrix is such that it varies in the dynamic range of the image data, it is traded off with the resolution of the image. However, it is possible to reproduce the half-tone density even in the image data having its gradation changed to two.

In random dithering, changing of the gradation to two in a desired threshold value is similar to that in the pure quantization. Moreover, the quantization error that is developed during the quantization is stored. For the target pixels that are processed, quantization is performed by taking into account an error in the surrounding pixels that is established after completion of the quantization by raster form order, Thus, the random dithering is a half-tone process of minimizing the error developed due to the quantization in the overall image data by the quantization of target pixels.

Following is the explanation of the error that is developed during quantization. For example, in a case of quantizing the multinary image data of 256 gradations having a dynamic range from 0 to 255, to a value of either 0 or 1, if the image data is 100, the quantization value is 0. However, even if the image data has 100 half-tone density information, it is handled as the lowest value i.e. 0, thereby losing the half-tone density information of the image data. Consequently, the quantization of this image data becomes 100=100-0 (minimum value of the dynamic range), Moreover, if the image data is 200, the quantization value becomes 1. In this case also, in spite of having 200 half-tone information, it is handled as the lowest value i.e. 0 and the quantization error of the image data becomes -55=200-255 (maximum value of the dynamic range).

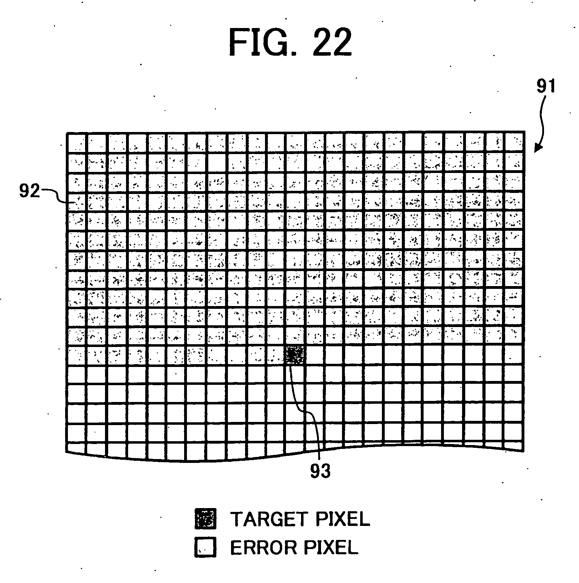

If these quantization error values are stored separately from the image data after the quantization process for each pixel, as is shown in Fig. 22, for pixel 1092 that is indicated by a dotted square, the quantization error is already established (definite) and stored. This is because image data 1091 is in raster form and is processed in order. In random dithering, an average of error values around the target pixel 1093 for which an error is established is added to the target pixel value and then the gradation is changed to two. This enables to minimize the missing of half-tone density information caused due to the quantization error in the overall image data.

These three ways of half-tone processing enable binarizing of the multinary image data in the half-tone processor 1010i. Binarizing reduces the data quantity and by selecting a half-tone processing suitable to the type of the image, a high quality image can be achieved,

Following is the explanation of outputting an image data to the external PC 1019.

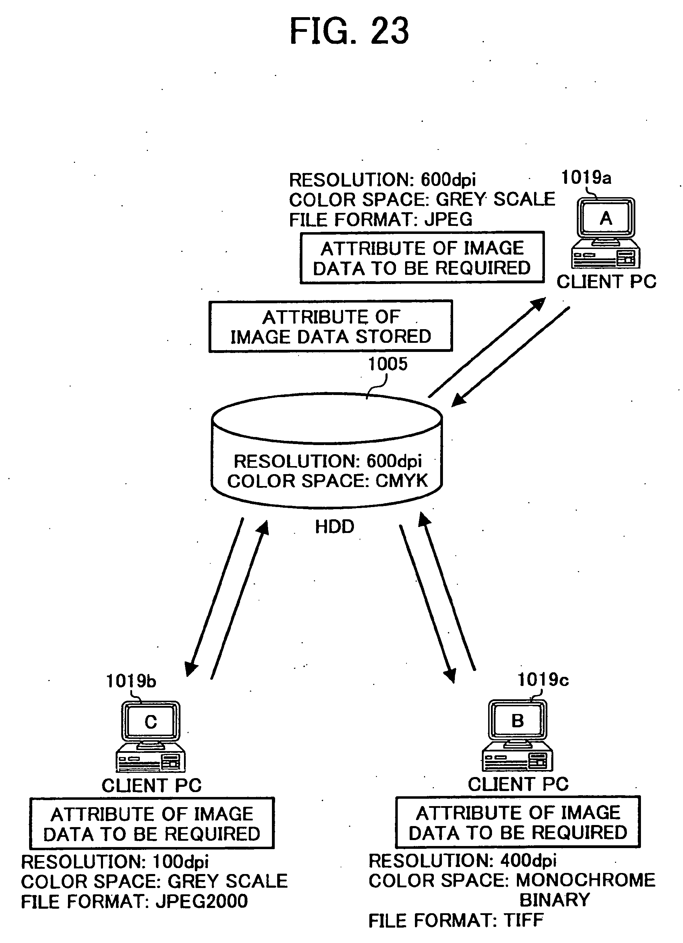

As is shown in Fig. 23, the external PC 1019 that is a client, determines attributes for receiving (capturing) the image data. The external PC 1019 displays these attributes to the digital color copying machine and transmits a requirement signal for the image data. From the attributes of the image data that is stored in the HDD 1005 and the image capturing requirement signal from the external PC 1019, the image data parameter values in the data format converter 1010 are determined.

According the image data parameter values in the data format converter 1010, the setting values of parameters of the expandor 1010a, the multinary converter 1010b, the color-space converter 1010d, the color-grey converter 1010f, the resolution converter 1010c, the filtering processor 1010g, the γ processor 1010h, the half-tone processor 1010i, and the compressor 1010e of the data format converter 1010 shown in Fig. 17 are changed. Due to this, the image processing according to these changed setting parameters is performed in the data format converter 1010 and the image data after the image processing is transmitted to the external PC 1019 from where the requirement signal was transmitted,

Thus, the image data stored in the HDD 1005 is image data of a color-space (color-binary image-data) that is input as color-printer image-data (input by scan input of a document, or input by a printer function or a FAX function).

In this case, as is shown in Fig. 23, the image data stored in the HDD 1005 is assumed to be CMYK image data having resolution of 600 dpi. In each external PC 1019 that is a client in Fig. 23, the attributes of the image data are assumed to be such that

client A: grey scale multinary image having a resolution of 200 dpi and JPEG format

client B: monochrome binary image having a resolution of 400 dpi and TIFF format

client C: grey scale multinary image having a resolution of 100 dpi and JPEG 2000 format

and a requirement signal for reception (capturing) has been sent.

In this case, in the data format converter 1010, requirement signals from respective clients are received and image processing is performed by setting processing conditions (parameters) in accordance with the requirement signals.

In this example, the color-space is converted from CMYK space to RGB space in the color-space converter 1010d and the RGB space is converted to grey data in color-grey converter 1010f.

Then, the values of resolution conversion parameters that are used for resolution conversion in the resolution converter 1010c in the data format converter 1010 (see Fig. 17) are determined by the requirement signal of resolution from the client and resolution of the image data that is stored in the HDD 1005. The resolution is converted from 600 dpi to 200 dpi for client A, from 600 dpi to 400 dpi for client B, and from 600 dpi to 100 dpi for client C.

In the next filtering processor 1010g and the γ processor 1010h, a coefficient that is suitable for requirement from the external PC 1019 is selected.

In the half-tone processor 1010i, no processing is performed for clients A and C since it is a grey scale multinary image. For binary monochrome image for client B, the half-tone processing is performed.

In the compressor 1010e, the file format is converted to JPEG format for client A, to TIFF format for client B, and to JPEG 2000 format for client C.

Following is the explanation of conversion of image data when the transmission requirement from the external PC 1019 is for monochrome image data having a format that is different than the format of the monochrome image data stored in the HDD 1005. In other words, this is the explanation of conversion when the monochrome image data (binary or multinary) that is stored in the HDD 1005 is converted to monochrome image data (binary or multinary) and output to the external PC 1019.

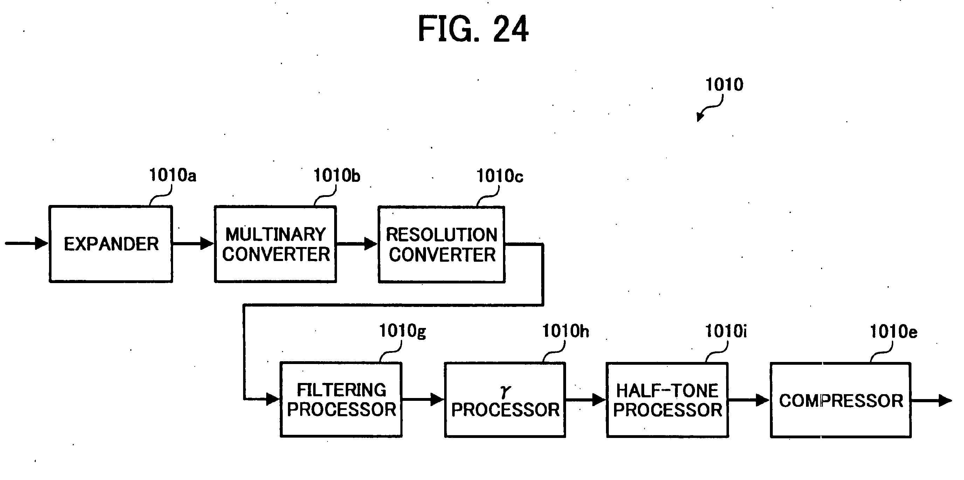

Fig. 24 is a block diagram of the data format converter during conversion of monochrome image data to monochrome image data having a different format. As is shown in Fig, 24, the data format converter 1010 that converts the data format of the image data that is to be transmitted includes the expandor 1010a, the multinary converter 1010b, the resolution converter 1010c, the filtering processor 1010g, the γ processor 1010h, the half-tone processor 1010i, and the compressor 1010e and performs image processing using these components. The expandor 1010a expands the compressed data that is stored in the HDD 1005. The expanded image data is then converted to multinary data in the multinary converter 1010b, The resolution of the image data is converted to a predetermined resolution in the resolution converter 1010c. The image data subjected to resolution conversion is then emphasized and smoothed in the filtering processor 1010g. The density of the image is adjusted in the γ processor 1010h. The image data is subjected to half-tone processing in the half-tone processor 1010i and then subjected to compression-encoding in a predetermined compression-encoding format by the compressor 1010e. The processed image data is then transmitted to the external PC 1095. Thus, the format of the image data having a first format stored in the HDD 1005 is converted and the image data is output as image data of a second image format. Thus, it functions like an image data transmitter. The resolution is converted in the order of expansion → conversion to multinary data → resolution (dpi) conversion → filtering → density γ processing → half-tone processing → compression. Therefore, the data stored in the HDD 1005 for which there is a requirement of print out can be acquired and used for viewing and editing in a terminal like the external PC 1019 that is a client where the data is to be used.

Following is the explanation of concrete structure of the data format converter 1010 shown in Fig. 24.

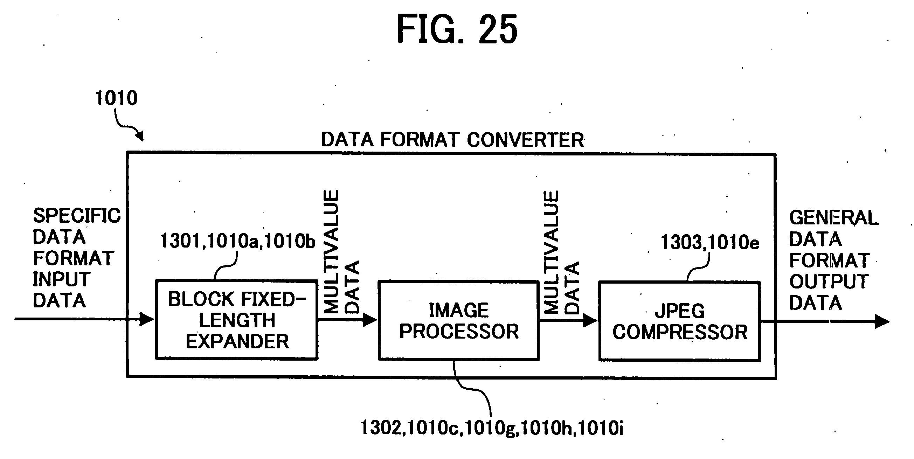

Fig. 25 is a block diagram of an example of a structure of the data format converter 1010, As is shown in Fig. 25, the data format converter 1010 includes a block fixed-length expander 1301 on an input side and a JPEG compressor 1303 on an output side. The block fixed-length expander 1301 includes an expander 1010a and a multinary converter 1010b. The JPEG compressor 1303 includes a compressor 1010e. The image processor 1302 in Fig. 25 (the resolution converter 1010c, the filtering processor 1010g, the γ processor 1010h, and the half-tone processor 1010i) is equipped with the functions of resolution conversion, filtering, γ processing, and half-tone processing).

According to the example in Fig. 25, the print out requirement data is binary image data and this data is compressed by binary data compression of the block fixed-length. This compressed data is stored in the HDD 1005 as data having a special data format. Thus, at the time of transmission, the data having a special data format that is stored in the HDD 1005 is compressed by binary compression and converted to binary image data having a general data format. This converted binary data is output to the external PC 1019.

In this case, the data in the special data format that is input is expanded by a special block fixed expansion in which the efficiency of compression or the efficiency of data processing is maintained. In the example, the general data format that is to be used on the output side is compressed by a standard JPEG compression. In this case, the special data format means a data format that is peculiar to the digital color copying machine 1100 and not a general format like JPEG, JPEG 2000 that are commonly used in a normal PC etc.

The operation of data format conversion in the data format converter 1010 shown in Fig. 25 is as follows, Binary image data is compressed by a special block fixed-length compression and the compressed data is input to the data format converter 1010. In the data format converter 1010, the compressed data is expanded and transformed into the original multinary data in the block fixed-length expandor 1301 to perform predetermined processing in the image processor 1302. After the data is transformed into the original multinary data, the image processor 1302 performs image processing of the data. After the predetermined image processing by the image processor 1302, when the data is to be output to an external unit as transmission data, the JPEG compressor 1303 converts the data to the general data format and the converted data is output. The format used for the data stored in the HDD 1005 being a special fixed-length compressed data format, the data management can be carried out by keeping the fluctuation in the compression efficiency due to the image data fixed (stabilized), Moreover, since the data is handled in units of blocks, data processing like the recovering and rearranging of data becomes easier. For block fixed-length encoding and decoding that is used in the present embodiment, it is possible to apply the known technology (like technology disclosed in e.g. Japan Patent Application Laid Open Publication No. Hei11-331844).

By transmitting the data in a general data format like JPEG that is standardized, it is possible to standardize a data format (to have a common data format) in a unit to which the data is transmitted. This also enables to build a data format conversion system in which both the quality of data and the efficiency of data transmission are maintained.

When binary data stored in the HDD 1005 is subjected to transmission, general standard compression and expansion formats like Modified Huffman (MH) format, Modified Read (MR) format / Modified MR (MMR) format etc. can be used,

The functions of the multinary converter 1010b, the resolution converter 1010c, the compressor 1010e, the filtering processor 1010g, the γ processor 1010h, and the half-tone processor 1010i are explained earlier and hence omitted here.

Following is the explanation of outputting of image data to the external unit PC 1019 etc.

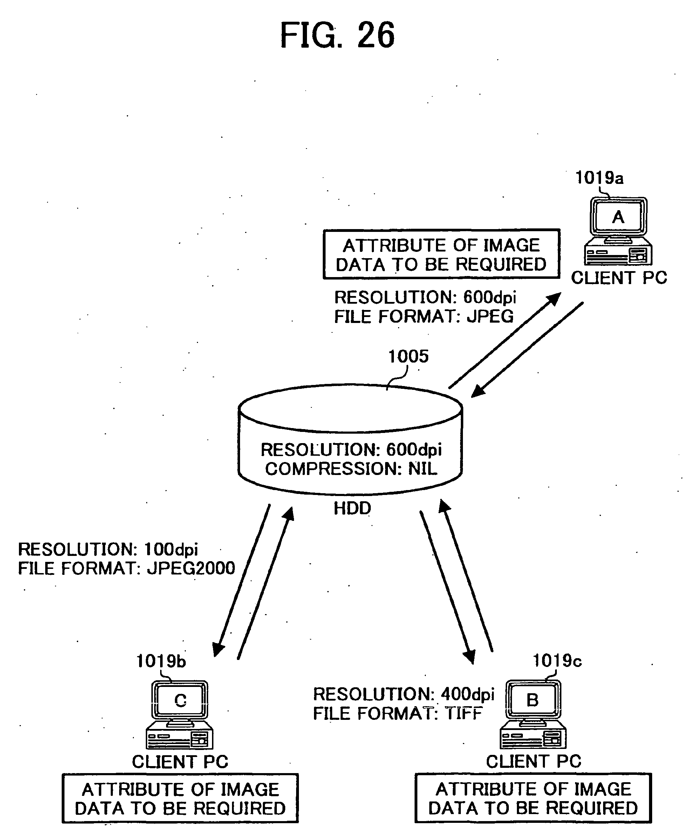

As is shown in Fig. 26, the external PC 1019 that is a client, determines attributes for receiving (capturing) the image data. The external PC 1019 displays these attributes to the digital color copying machine and transmits a requirement signal for the image data. From the attributes of the image data that is stored in the HDD 1005 and the image capturing requirement signal from the external PC 1019, the image data parameter values in the data format converter 1010 are determined. According to the image data parameter values in the data format converter, the setting values of parameters of the expander 1010a, the multinary converter 1010b, the resolution converter 1010c, the filtering processor 1010g, the γ processor 1010h, the half-tone processor 1010i, and the compressor 1010e of the data format converter 1010 shown in Fig. 24 are changed. Due to this, the image processing according to these changed setting parameters is performed in the data format converter 1010 and the image data after the image processing is transmitted to the external PC 1019 form where the requirement signal is transmitted.

Thus, the image data stored in the HDD 1005 is monochrome image data that is input as monochrome printer image data (input by scan input of a document, or input by a printer function or a FAX function).

In this case, as is shown in Fig. 26, the image data stored in the HDD 1005 is assumed to be uncompressed binary image data having a resolution of 600 dpi. In each external PC 1019 that is a client in Fig. 26, the attributes of the image data are assumed to be such that

client A: image having resolution of 200 dpi and JPEG format
client B: image having a resolution of 400 dpi and TIFF format
client C: image having a resolution of 100 dpi and JPEG 2000 format
and a requirement signal for reception (capturing) has been sent.

In this case, in the data format converter 1010, requirement signals from respective clients are received and image processing is performed by setting processing conditions (parameters) in accordance with the requirement signals.

In this example, since the image data stored in the HDD 1005 is uncompressed data, the operation of the expandor 1010a is through (not necessary).

Then, the values of resolution conversion parameters that are used for resolution conversion in the resolution converter 1010c in the data format converter 1010 (see Fig. 24) are determined by the requirement signal of resolution from the client and resolution of the image data that is stored in the HDD 1005. The resolution is converted from 600 dpi to 200 dpi for client A, from 600 dpi to 400 dpi for client B, and from 600 dpi to 100 dpi for client C.

In the next filtering processor 1010g, the $\gamma$ processor 1010h, and the half-tone processor 1010i, a coefficient that is suitable for requirement from the external PC 1019 is selected.

In the compressor 1010e, the file format is converted to JPEG format for client A, to TIFF format for client B, and to JPEG 2000 format for client C.

Here, the image data of the print data format that is a first format stored in the storage is converted to a second format according to the conversion conditions. The converted data is then transmitted through the network to the external unit that is connected. This enables the external unit to receive the image data having a format that is converted to the second format from the image processing apparatus. Thus, it is possible to use the image data in the print data format that is the first format stored in the storage for wide range of applications, Moreover, since the image data in the print data format that is the first format stored in the storage is converted to the data having the second format, it is possible to receive the same image data by plurality of users in different formats.

In the present embodiment, a case of converting a special data format that is unit-dependent to a general data format and outputting it to the external PC 1019 etc. is explained, However, the present invention is not restricted to this case only. and both the input data as well as the output data to and from the data converter 1010 may have a special format or a general format.

The image data is input by using various functions of the digital color copying machine and stored in the HDD 1005. This image data is to be output to a color printer. This image data and the information about the data format such as the resolution, color-space, data compression type etc. may be stored together. By doing so, when the external PC that is a client receives (captures) the image, it is convenient when the attributes of the image data that is stored in the HDD 1005 are to be taken over as they are. In other words, without specifying the attributes that are to be captured by the external PC 1019, the overall information or a part of the information regarding the data format that is managed together with the image data in the data format converter 1010 can be automatically converted and set as processing parameters. Therefore, is possible to omit setting the attributes of the image data that is captured by the external PC 1019 on the client side thereby improving the operability.

In the present embodiment, a digital color copying machine that is a compound machine in which the copying function, the facsimile (FAX) function, the printing function, and the function of transmitting an input image (the image that is input by reading of a document image, or by the printing function or by the FAX function) are combined is used as an image processing apparatus. However, it is not restricted to the digital color copying machine only and may be a printing unit etc. that uses only the printing function.

**Claims**

1. An apparatus (1100) for processing image data and sending the image data to an external device (1019), the apparatus comprising:

   a printer engine (1100a) that forms an image on a recording medium based on acquired image data;
   a memory (1005) that stores the acquired image data, in a first format suitable for image formation by the printer engine;
   a transmitter (1014) that transmits the acquired image data in a second format that is acceptable to the external device (1019) to the external device (1019); and
   a printer controller (1004) adapted to perform raster image processing according to a printing command from the external device (1019), and to control the memory (1005),
   wherein
   the printer controller (1004) includes a first compressor (1004a, 1004b) that compresses the data to be stored to the first format, and wherein the printer controller is adapted to transfer the compressed data in the first format to the memory (1005); and the apparatus (1100) further comprises
   a format converter (1010) that converts the first format of the image data stored in the memory (1005) to the second format, wherein
   the format converter (1010) includes an expandor (1010a) that expands the compressed image data from the first format to a third format, and a second compressor (1103, 1010e) that compresses the expanded image data from the third format to the second format, wherein
   the printer controller (1004) is further adapted to transfer the data in the second format to the transmitter (1014).

**2.** The image processing apparatus according to claim 1, further comprising an image reader (1; 1001) that reads an image on a document to thereby acquire the image data corresponding to the image.

**3.** The image processing apparatus according to claim 1, wherein the second format is a general standardized format that is acceptable to a general information processing unit.

**4.** The image processing apparatus according to claim 1, wherein the second compressor (1103, 1010) compresses the image data stored and an expandor (121; 1010a) that expands the image data compressed, and
the format converter (14; 1010) converts the first format of the image data expanded to the second format.

**5.** The image processing apparatus according to claim 1, wherein the format converter (1010) includes a multinary converter (1010b) that increases number of gradations of the image data stored to thereby obtain multinary image data, and
the format converter (1010) converts the first format of the multinary image data to the second format.

**6.** The image processing apparatus according to claim 1, wherein the format converter (1010) includes a resolution converter (1010c) that converts resolution of the image data stored to a predetermined value, and
the format converter (1010) converts the first format of the image data resolution converted to the second format.

**7.** The image processing apparatus according to claim 1, further comprising a resolution setting unit (20) that sets the value.

**8.** The image processing apparatus according to claim 1, wherein the image data stored is color data and the format converter (1010) includes a color-space converter (1010d) that converts color-space of the image data, and
the format converter (1010) converts the first format of the image data color-space converted to the second format.

**9.** The image processing apparatus according to claim 1, wherein the format converter (14; 1010) converts the first format of the image data stored to the second format based on any one or more of an attribute of the image data stored and information obtained from the external device (30; 1019).

**10.** The image processing apparatus according to claim 1, further comprising an image forming unit (8; 1009) that forms an image on a recording medium based on the image data stored, wherein
the format converter (14; 1010) converts the first format of the image data stored to a third format that is acceptable to the image forming unit (8; 1009).

**11.** The image processing apparatus according to claim 10, wherein the conditions are set based on information obtained from the external device (30; 1019).

**12.** The image processing apparatus according to claim 10, further comprising an operating unit (20) that specifies the conditions and the external device (30; 1019).

**13.** The image processing apparatus according to claim 1 2, wherein the image data in the first format is an image data in a predetermined color-space, and the image data in the second format is an image data in monochrome.

**14.** The image processing apparatus according to claim 1, wherein the format converter (1010) includes a binary converter that converts the image data stored into binary image data, and
the format converter (1010) converts the first format of the binary image data to the second format.

**15.** The image processing apparatus according to claim 1, wherein the format converter (14; 1010) includes a filter (102; 1010g) that filters the image data stored, and
the format converter (14; 1010) converts the first format of the image data filtered to the second format.

**16.** The image processing apparatus according to claim 1, wherein the format converter (1010) includes a half-tone processor (1010i) that converts a gradation of the image data stored, and
the format converter (1010) converts the first format of the image data gradation converted to the second format.

**17.** The image processing apparatus according to claim 1, wherein the image data stored is colored, and the format converter (1010) includes a color-gray converter (1010i) that converts a the colored image data into grey, and

the format converter (1010) converts the first format of the grey image data to the second format.

18. The image processing apparatus according to claim 1, wherein the format converter (14; 1010) includes a gamma correction unit (123; 1010h) that carries out gamma correction of the image data stored based on predetermined gamma correction data, and
the format converter (14; 1010) converts the first format of the image data gamma corrected to the second format.

19. The image processing apparatus according to claim 18, further comprising a gamma value setting unit (20) that sets the gamma correction data.

20. The image processing apparatus according to claim 1, wherein the format converter (14; 1010) includes a color correction unit (124) that carries out color correction of the image data stored, and the format converter (14; 1010) converts the first format of the image data color corrected to the second format.

21. The image processing apparatus according to claim 20, wherein the image data is in CMYK color model, and the color correction includes conversion of the image data in the CMYK color model to an image data in RGB color model.

22. The image processing apparatus according to claim 1, further comprising:

    an image quality mode setting unit (11; 1004a) that sets an image quality mode of the image data that is to be stored in the memory (12, 13; 1005, 1111); and
    a color correction parameter changer (20) that changes a color correction parameter for the color correction according to the set image quality mode.

23. The image processing apparatus according to claim 1, wherein the format converter (14; 1010) further includes a format setting unit (20) that specifies the second format.

24. A method of processing image data and sending the image data to an external device, the method comprising:

    acquiring image data corresponding to an image;
    storing the acquired image data in a first format suitable for image formation in a memory (1005),
    transmitting the acquired image data in a second format that is acceptable to the external device (1019) to the external device (1019);
    performing raster image processing according to a printing command from the external device (1019),
    compressing the data to be stored in a first compressor (1004a, 1004b) to the first format,
    transferring the compressed data in the first format to the memory (1005);
    converting the first format of the image data stored in the memory (1005) to the second format,
    expanding the compressed image data from the first format to a third format, and
    compressing the expanded image data in a second compressor (1103, 1010e) from the third format to the second format, and
    transferring the data in the second format to the transmitting step.

25. The method according to claim 24, wherein the second format is a general standardized format that is acceptable to a general information processing unit.

26. The method according to claim 24, further comprising compressing the image data acquired, wherein
the storing includes storing the image data compressed, and
the converting includes expanding the image data compressed, and converting the first format of the image data expanded to the second format.

27. The method according to claim 24, wherein
the converting includes a converting resolution of the image data stored to a value that is set in advance, and converting the first format of the image data whose resolution has been converted to the second format.

28. The method according to claim 24, wherein
the converting includes performing gamma correction to the image data stored based on predetermined gamma correction data, and converting the first format of the image data gamma corrected to the second format.

**29.** The method according to claim 24, wherein
the converting includes performing color correction to the image data stored, and converting the first format of the image data color corrected to the second format.

**30.** A computer program that includes a plurality of computer executable instructions that cause a computer to perform the method of claim 24.

**31.** A computer readable recording medium on which is recorded a computer program that includes a plurality of computer executable instructions that cause a computer to perform the method of claim 24.

**32.** The method of claim 24, wherein the step of acquiring image data corresponding to the image comprises reading an image on a document.

**Patentansprüche**

**1.** Vorrichtung (1100) zum Verarbeiten von Bilddaten und Senden der Bilddaten an eine externe Vorrichtung (1019), wobei die Vorrichtung umfasst:

eine Druckermaschine (1100a), die ein Bild auf einem Aufzeichnungsmedium anhand ermittelter Bilddaten erzeugt;
einen Speicher (1005), der die ermittelten Bilddaten in einem ersten Format, das für die Bilderzeugung durch die Druckermaschine geeignet ist, speichert;
einen Sender (1014), der die ermittelten Bilddaten in einem zweiten Format, das für die externe Vorrichtung (1019) geeignet ist, an die externe Vorrichtung (1019) sendet; und
eine Druckersteuereinheit (1004), die ausgelegt ist, eine Rasterbildverarbeitung entsprechend einem Druckbefehl von der externen Vorrichtung (1019) auszuführen und den Speicher (1005) zu steuern, wobei die Druckersteuereinheit (1004) einen ersten Komprimierer (1004a, 1004b) enthält, der die zu speichernden Daten in das erste Format komprimiert, und wobei die Druckersteuereinheit ausgelegt ist, die in das erste Format komprimierten Daten an den Speicher (1005) zu übertragen; und die Vorrichtung (1100) ferner umfasst:

einen Formatumsetzer (1010), der das erste Format der in dem Speicher (1005) gespeicherten Bilddaten in das zweite Format umsetzt, wobei
der Formatumsetzer (1010) einen Dekomprimierer (1010a), der die komprimierten Bilddaten von dem ersten Format in ein drittes Format dekomprimiert, und einen zweiten Komprimierer (1103, 1010e), der die dekomprimierten Daten von dem dritten Format in das zweite Format komprimiert, enthält, wobei
die Druckersteuereinheit (1004) ferner ausgelegt ist, die Daten in dem zweiten Format an den Sender (1014) zu übertragen.

**2.** Bildverarbeitungsvorrichtung nach Anspruch 1, die ferner einen Bildleser (1; 1001) umfasst, der ein Bild auf einem Dokument liest, um dadurch die dem Bild entsprechenden Bilddaten zu ermitteln.

**3.** Bildverarbeitungsvorrichtung nach Anspruch 1, wobei das zweite Format ein allgemeines standardisiertes Format ist, das von einer allgemeinen Datenverarbeitungseinheit annehmbar ist.

**4.** Bildverarbeitungsvorrichtung nach Anspruch 1, wobei der zweite Komprimierer (1103, 1010) die gespeicherten Bilddaten komprimiert und ein Dekomprimierer (121; 1010a) die komprimierten Bilddaten dekomprimiert, und der Formatumsetzer (14; 1010) das erste Format der dekomprimierten Bilddaten in das zweite Format umsetzt.

**5.** Bildverarbeitungsvorrichtung nach Anspruch 1, wobei der Formatumsetzer (1010) einen Multinärumsetzer (1010b) enthält, der die Anzahl von Gradationen der gespeicherten Bilddaten erhöht, um dadurch multinäre Bilddaten zu erhalten, und der Formatumsetzer (1010) das erste Format der multinären Bilddaten in das zweite Format umsetzt.

**6.** Bildverarbeitungsvorrichtung nach Anspruch 1, wobei der Formatumsetzer (1010) einen Auflösungsumsetzer (1010c) enthält, der die Auflösung der gespeicherten Bilddaten in einen vorgegebenen Wert umsetzt, und der Formatumsetzer (1010) das erste Format der auflösungsumgesetzten Bilddaten in das zweite Format umsetzt.

**7.** Bildverarbeitungsvorrichtung nach Anspruch 1, das ferner eine Auflösungseinstellungseinheit (20) umfasst, die den Wert einstellt.

**8.** Bildverarbeitungsvorrichtung nach Anspruch 1, wobei die gespeicherten Bilddaten Farbdaten sind und der Formatumsetzer (1010) einen Farbraumumsetzer (1010d) enthält, der den Farbraum der Bilddaten umsetzt, und der Formatumsetzer (1010) das erste Format der farbraumumgesetzten Bilddaten in das zweite Format umsetzt.

**9.** Bildverarbeitungsvorrichtung nach Anspruch 1, wobei der Formatumsetzer (14; 1010) das erste Format der gespeicherten Bilddaten in das zweite Format anhand eines Attributs der gespeicherten Bilddaten und/oder von Informationen, die von der externen Vorrichtung (30; 1019) erhalten werden, umsetzt.

**10.** Bildverarbeitungsvorrichtung nach Anspruch 1, die ferner eine Bilderzeugungseinheit (8; 100) umfasst, die ein Bild auf einem Aufzeichnungsmedium anhand der gespeicherten Bilddaten erzeugt, wobei der Formatumsetzer (14; 1010) das erste Format der gespeicherten Bilddaten in ein drittes Format, das für die Bilderzeugungseinheit (8; 1009) geeignet ist, umsetzt.

**11.** Bildverarbeitungsvorrichtung nach Anspruch 10, wobei die Bedingungen anhand der von der externen Vorrichtung (30; 1019) erhaltenen Informationen eingestellt werden.

**12.** Bildverarbeitungsvorrichtung nach Anspruch 10, die ferner eine Betriebseinheit (20) umfasst, die die Bedingungen und die externe Vorrichtung (30; 1019) bestimmt.

**13.** Bildverarbeitungsvorrichtung nach Anspruch 12, wobei die Bilddaten in dem ersten Format Bilddaten in einem vorgegebenen Farbraum sind und die Bilddaten in dem zweiten Format einfarbige Bilddaten sind.

**14.** Bildverarbeitungsvorrichtung nach Anspruch 1, wobei der Formatumsetzer (1010) einen Binärumsetzer enthält, der die gespeicherten Bilddaten in binäre Bilddaten umsetzt, und der Formatumsetzer (1010) das erste Format der binären Bilddaten in das zweite Format umsetzt.

**15.** Bildverarbeitungsvorrichtung nach Anspruch 1, wobei der Formatumsetzer (14; 1010) ein Filter (102; 1010g) enthält, das die gespeicherten Bilddaten filtert, und der Formatumsetzer (14; 1010) das erste Format der gefilterten Bilddaten in das zweite Format umsetzt.

**16.** Bildverarbeitungsvorrichtung nach Anspruch 1, wobei der Formatumsetzer (1010) eine Halbtonverarbeitungseinheit (1010i) enthält, die eine Gradation der gespeicherten Bilddaten umsetzt, und der Formatumsetzer (1010) das erste Format der gradationsumgesetzten Bilddaten in das zweite Format umsetzt.

**17.** Bildverarbeitungsvorrichtung nach Anspruch 1, wobei die gespeicherten Bilddaten farbig sind und der Formatumsetzer (1010) einen Graustufenumsetzer (1010i) enthält, der die farbigen Bilddaten in Grau umsetzt, und der Formatumsetzer (1010) das erste Format der grauen Bilddaten in das zweite Format umsetzt.

**18.** Bildverarbeitungsvorrichtung nach Anspruch 1, wobei der Formatumsetzer (14; 1010) eine Gammakorrektureinheit (123; 1010h) enthält, die eine Gammakorrektur der gespeicherten Bilddaten anhand von vorgegebenen Gammakorrekturdaten ausführt, und der Formatumsetzer (14; 1010) das erste Format der gammakorrigierten Bilddaten in das zweite Format umsetzt.

**19.** Bildverarbeitungsvorrichtung nach Anspruch 18, die ferner eine Gammawerteinstellungseinheit (20) umfasst, die die Gammakorrekturdaten einstellt.

**20.** Bildverarbeitungsvorrichtung nach Anspruch 1, wobei der Formatumsetzer (14; 1010) eine Farbkorrektureinheit (124) enthält, die eine Farbkorrektur der gespeicherten Bilddaten ausführt, und der Formatumsetzer (14; 1010) das erste Format der farbkorrigierten Bilddaten in das zweite Format umsetzt.

**21.** Bildverarbeitungsvorrichtung nach Anspruch 20, wobei die Bilddaten in dem CMYK-Farbmodell sind und die Farbkorrektur die Umwandlung der Bilddaten in dem CMYK-Farbmodell in Bilddaten in dem RGB-Farbmodell umfasst.

**22.** Bildverarbeitungsvorrichtung nach Anspruch 1, die ferner umfasst:

eine Bildqualitätsmodus-Einstelleinheit (11; 1004a), die einen Bildqualitätsmodus der in dem Speicher (12, 13; 1005, 1111) zu speichernden Bilddaten einstellt; und

eine Farbkorrekturparameterwechseleinheit (20), die einen Farbkorrekturparameter für die Farbkorrektur entsprechend der eingestellten Bildqualitätsmodus einstellt.

**23.** Bildverarbeitungsvorrichtung nach Anspruch 1, wobei der Formatumsetzer (14; 1010) ferner eine Formateinstellungseinheit (20) enthält, die das zweite Format bestimmt.

**24.** Verfahren zum Verarbeiten von Bilddaten und Senden der Bilddaten an eine externe Vorrichtung, wobei das Verfahren umfasst:

Ermitteln von einem Bild entsprechenden Bilddaten;

Speichern der ermittelten Bilddaten in einem ersten Format, das für die Bilderzeugung geeignet ist, in einem Speicher (1005),

Senden der ermittelten Bilddaten in einem zweiten Format, das von der externen Vorrichtung (1019) annehmbar ist, an die externe Vorrichtung (1019);

Ausführen einer Rasterbildverarbeitung entsprechend einem Druckbefehl von der externen Vorrichtung (1019), Komprimieren der zu speichernden Daten in einem ersten Komprimierer (1004a, 1004b) in das erste Format, Übertragen der komprimierten Daten in dem ersten Format an den Speicher (1005);

Umwandeln des ersten Formats der in dem Speicher (1005) gespeicherten Daten in das zweite Format, Dekomprimieren der komprimierten Bilddaten von dem ersten Format in ein drittes Format und Komprimieren der dekomprimierten Bilddaten in einem zweiten Komprimierer (1103, 1010e) von dem dritten Format in das zweite Format, und

Übertragen der Daten in dem zweiten Format an den Sendeschritt.

**25.** Verfahren nach Anspruch 24, wobei das zweite Format ein allgemeines standardisiertes Format ist, das für eine allgemeine Datenverarbeitungseinheit geeignet ist.

**26.** Verfahren nach Anspruch 24, das ferner das Komprimieren der ermittelten Bilddaten umfasst, wobei

das Speichern das Speichern der komprimierten Bilddaten umfasst, und

das Umwandeln das Dekomprimieren der komprimierten Bilddaten und das Umwandeln des ersten Formats der dekomprimierten Bilddaten in das zweite Format enthält.

**27.** Verfahren nach Anspruch 24, wobei

das Umwandeln eine Auflösungsumwandlung der gespeicherten Bilddaten auf einen im Voraus eingestellten Wert und das Umwandeln des ersten Formats der Bilddaten, deren Auflösung umgesetzt wurde, in das zweite Format enthält.

**28.** Verfahren nach Anspruch 24, wobei

das Umwandeln das Ausführen einer Gammakorrektur der gespeicherten Bilddaten anhand von vorgegebenen Gammakorrekturdaten und Umwandeln des ersten Formats der gammakorrigierten Bilddaten in das zweite Format enthält.

**29.** Verfahren nach Anspruch 24, wobei

das Umwandeln das Ausführen einer Farbkorrektur der gespeicherten Bilddaten und das Umwandeln des ersten Formats der farbkorrigierten Bilddaten in das zweite Format enthält.

**30.** Computerprogramm, das mehrere computerausführbare Anweisungen enthält, die bewirken, dass ein Computer das Verfahren nach Anspruch 24 ausführt.

**31.** Computerlesbares Aufzeichnungsmedium, auf dem ein Computerprogramm aufgezeichnet ist, das mehrere computerausführbare Anweisungen enthält, die bewirken, dass ein Computer das Verfahren nach Anspruch 24 ausführt.

**32.** Verfahren nach Anspruch 24, wobei der Schritt des Ermittelns der dem Bild entsprechenden Bilddaten das Lesen eines Bildes in einem Dokument umfasst.

**Revendications**

1. Appareil (1100) pour traiter des données d'image et envoyer les données d'image à un dispositif externe (1019), l'appareil comprenant :

   un moteur d'imprimante (1100a) qui forme une image sur un support d'enregistrement sur la base de données d'image acquises ;

   une mémoire (1005) qui mémorise les données d'image acquises, dans un premier format approprié pour la formation d'image par le moteur d'imprimante ;

   un émetteur (1014) qui transmet les données d'image acquises dans un deuxième format qui est acceptable pour le dispositif externe (1019) au dispositif externe (1019) ; et

   un contrôleur d'imprimante (1004) conçu pour effectuer un traitement d'image matricielle conformément à une commande d'impression provenant du dispositif externe (1019), et pour commander la mémoire (1005), dans lequel

   le contrôleur d'imprimante (1004) comprend un premier compresseur (1004a, 1004b) qui compresse les données à mémoriser au premier format, et dans lequel le contrôleur d'imprimante est conçu pour transférer les données compressées dans le premier format à la mémoire (1005) ; et l'appareil (1100) comprend en outre

   un convertisseur de format (1010) qui convertit le premier format des données d'image mémorisées dans la mémoire (1005) en le deuxième format, dans lequel

   le convertisseur de format (1010) comprend un décompresseur (1010a) qui décompresse les données d'image compressées du premier format dans un troisième format, et un deuxième compresseur (1103, 1010e) qui compresse les données d'image décompressées du troisième format dans le deuxième format, dans lequel le contrôleur d'imprimante (1004) est en outre conçu pour transférer les données dans le deuxième format à l'émetteur (1014).

2. Appareil de traitement d'image selon la revendication 1, comprenant en outre un lecteur d'image (1 ; 1001) qui lit une image sur un document pour, de ce fait, acquérir les données d'image correspondant à l'image.

3. Appareil de traitement d'image selon la revendication 1, dans lequel le deuxième format est un format général normalisé qui est acceptable pour une unité de traitement d'informations générales.

4. Appareil de traitement d'image selon la revendication 1, dans lequel le deuxième compresseur (1103, 1010) compresse les données d'image mémorisées et un décompresseur (121 ; 1010a) décompresse les données d'image compressées, et

   le convertisseur de format (14 ; 1010) convertit le premier format des données d'image décompressées en le deuxième format.

5. Appareil de traitement d'image selon la revendication 1, dans lequel le convertisseur de format (1010) comprend un convertisseur multinaire (1010b) qui augmente le nombre de gradations des données d'image mémorisées pour, de ce fait, obtenir des données d'image multinaires, et

   le convertisseur de format (1010) convertit le premier format des données d'image multinaires en le deuxième format.

6. Appareil de traitement d'image selon la revendication 1, dans lequel le convertisseur de format (1010) comprend un convertisseur de résolution (1010c) qui convertit la résolution des données d'image mémorisées en une valeur prédéterminée, et

   le convertisseur de format (1010) convertit le premier format de la résolution de données d'image convertie en le deuxième format.

7. Appareil de traitement d'image selon la revendication 1, comprenant en outre une unité de détermination de résolution (20) qui détermine la valeur.

8. Appareil de traitement d'image selon la revendication 1, dans lequel les données d'image mémorisées sont des données de couleur et le convertisseur de format (1010) comprend un convertisseur d'espace colorimétrique (1010d) qui convertit l'espace colorimétrique des données d'image, et

   le convertisseur de format (1010) convertit le premier format des données d'image à espace colorimétrique converti en le deuxième format.

9. Appareil de traitement d'image selon la revendication 1, dans lequel le convertisseur de format (14 ; 1010) convertit

EP 1 404 104 B1

le premier format des données d'image mémorisées en le deuxième format sur la base de l'un quelconque ou plus d'un attribut des données d'image mémorisées et d'informations obtenues du dispositif externe (30 ; 1019).

10. Appareil de traitement d'image selon la revendication 1, comprenant en outre une unité de formation d'image (8 ; 1009) qui forme une image sur un support d'enregistrement sur la base des données d'image mémorisées, dans lequel
le convertisseur de format (14 ; 1010) convertit le premier format des données d'image mémorisées en un troisième format qui est acceptable pour l'unité de formation d'image (8 ; 1009).

11. Appareil de traitement d'image selon la revendication 10, dans lequel les conditions sont fixées sur la base d'informations obtenues du dispositif externe (30 ; 1019).

12. Appareil de traitement d'image selon la revendication 10, comprenant en outre une unité d'opération (20) qui spécifie les conditions et le dispositif externe (30 ; 1019).

13. Appareil de traitement d'image selon la revendication 12, dans lequel les données d'image dans le premier format sont des données d'image dans un espace colorimétrique prédéterminé, et les données d'image dans le deuxième format sont des données d'image monochromes.

14. Appareil de traitement d'image selon la revendication 1, dans lequel le convertisseur de format (1010) comprend un convertisseur binaire qui convertit les données d'image mémorisées en des données d'image binaires, et le convertisseur de format (1010) convertit le premier format des données d'image binaires en le deuxième format.

15. Appareil de traitement d'image selon la revendication 1, dans lequel le convertisseur de format (14 ; 1010) comprend un filtre (102 ; 1010g) qui filtre les données d'image mémorisées, et le convertisseur de format (14 ; 1010) convertit le premier format des données d'image filtrées en le deuxième format.

16. Appareil de traitement d'image selon la revendication 1, dans lequel le convertisseur de format (1010) comprend un processeur de demi-teinte (1010i) qui convertit une gradation des données d'image mémorisées, et le convertisseur de format (1010) convertit le premier format des données d'image à gradation convertie en le deuxième format.

17. Appareil de traitement d'image selon la revendication 1, dans lequel les données d'image mémorisées sont colorées, et le convertisseur de format (1010) comprend un convertisseur couleur-gris (1010i) qui convertit les données d'image colorées en gris, et le convertisseur de format (1010) convertit le premier format des données d'image en gris en le deuxième format.

18. Appareil de traitement d'image selon la revendication 1, dans lequel le convertisseur de format (14 ; 1010) comprend une unité de correction de gamma (123 ; 1010h) qui applique une correction de gamma aux données d'image mémorisées sur la base de données de correction de gamma prédéterminées, et le convertisseur de format (14 ; 1010) convertit le premier format des données d'image à gamma corrigé en le deuxième format.

19. Appareil de traitement d'image selon la revendication 18, comprenant en outre une unité de détermination de valeur de gamma (20) qui détermine les données de correction de gamma.

20. Appareil de traitement d'image selon la revendication 1, dans lequel le convertisseur de format (14 ; 1010) comprend une unité de correction de couleur (124) qui applique une correction de couleur aux données d'image mémorisées, et le convertisseur de format (14 ; 1010) convertit le premier format des données d'image à couleur corrigée en le deuxième format.

21. Appareil de traitement d'image selon la revendication 20, dans lequel les données d'image sont dans un modèle de couleurs CMJN, et la correction de couleur comprend la conversion des données d'image dans le modèle de couleurs CMJN en des données d'image dans le modèle de couleurs RVB.

22. Appareil de traitement d'image selon la revendication 1, comprenant en outre :

une unité de détermination de mode de qualité d'image (11 ; 1004a) qui détermine un mode de qualité d'image des données d'image qui doivent être mémorisées dans la mémoire (12, 13 ; 1005, 1111) ; et
un dispositif de modification de paramètre de correction de couleur (20) qui modifie un paramètre de correction de couleur pour la correction de couleur en fonction du mode de qualité d'image déterminé.

**23.** Appareil de traitement d'image selon la revendication 1, dans lequel le convertisseur de format (14 ; 1010) comprend en outre une unité de détermination de format (20) qui spécifie le deuxième format.

**24.** Procédé de traitement de données d'image et d'envoi des données d'image à un dispositif externe, le procédé comprenant :

l'acquisition de données d'image correspondant à une image ;
la mémorisation des données d'image acquises dans un premier format approprié pour la formation d'image dans une mémoire (1005),
la transmission des données d'image acquises dans un deuxième format qui est acceptable pour le dispositif externe (1019) au dispositif externe (1019) ;
l'exécution d'un traitement d'image matricielle conformément à une commande d'impression provenant du dispositif externe (1019),
la compression des données à mémoriser dans un premier compresseur (1004a, 1004b) en le premier format,
le transfert des données compressées dans le premier format à la mémoire (1005),
la conversion du premier format des données d'image mémorisées dans la mémoire (1005) en le deuxième format,
la décompression des données d'image compressées du premier format en un troisième format, et
la compression des données d'image décompressées dans un deuxième compresseur (1103, 1010e) du troisième format en le deuxième format, et
le transfert des données dans le deuxième format à l'étape de transmission.

**25.** Procédé selon la revendication 24, dans lequel le deuxième format est un format général normalisé qui est acceptable pour une unité de traitement d'informations générales.

**26.** Procédé selon la revendication 24, comprenant en outre la compression des données d'image acquises, dans lequel la mémorisation comprend la mémorisation des données d'image compressées, et
la conversion comprend la décompression des données d'image compressées, et la conversion du premier format des données d'image décompressées en le deuxième format.

**27.** Procédé selon la revendication 24, dans lequel
la conversion comprend la conversion de la résolution des données d'image mémorisées en une valeur qui est déterminée à l'avance, et la conversion du premier format des données d'image dont la résolution a été convertie en le deuxième format.

**28.** Procédé selon la revendication 24, dans lequel
la conversion comprend l'application d'une correction de gamma aux données d'image mémorisées sur la base de données de correction de gamma prédéterminées, et la conversion du premier format des données d'image à gamma corrigé en le deuxième format.

**29.** Procédé selon la revendication 24, dans lequel
la conversion comprend l'application d'une correction de couleur aux données d'image mémorisées, et la conversion du premier format des données d'image à couleur corrigée en le deuxième format.

**30.** Programme d'ordinateur qui comprend une pluralité d'instructions exécutables par un ordinateur qui amènent un ordinateur à effectuer le procédé de la revendication 24.

**31.** Support d'enregistrement pouvant être lu par un ordinateur sur lequel est enregistré un programme d'ordinateur qui comprend une pluralité d'instructions exécutables par un ordinateur qui amènent un ordinateur à effectuer le procédé de la revendication 24.

**32.** Procédé selon la revendication 24, dans lequel l'étape d'acquisition de données d'image correspondant à l'image comprend la lecture d'une image sur un document.

# FIG. 1

# FIG. 2

EP 1 404 104 B1

RGB → **SCANNING γ CORRECTION SECTION** (101) → RGB → **FILTERING PROCESSOR** (102) → RGB → **COLOR CORRECTION SECTION** (103) → CMYK → **MULTIPLYING PROCESSOR** (104) → CMYK

# FIG. 3

```
           110                    111
            ┌──────────────┐       ┌──────────────┐
  CMYK      │              │ CMYK  │              │ CMYK
───────────▶│  PRINTING γ  ├───────│  HALF TONE   ├───────
            │              │ 4×8bit│  PROCESSOR   │ 4×2bit
            └──────────────┘       └──────────────┘
```

EP 1 404 104 B1

# FIG. 4

# FIG. 5

CMYK → [EXPANDER (121)] → CMYK → [RESOLUTION CONVERTER (122)] → CMYK → [γ (123)] → CMYK → [COLOR CORRECTION SECTION (124)] → RGB → [GENERAL FORMAT PROCESSOR (125)] → RGB

EP 1 404 104 B1

FIG. 6

# FIG. 7

EP 1 404 104 B1

# FIG. 8

CMYK → EXPANDER **121** → CMYK → RESOLUTION CONVERTER **122** → CMYK → γ **123** → CMYK → COLOR CORRECTION SECTION **124** → RGB → GENERAL FORMAT PROCESSOR **125** → RGB

OPERATION PANEL **20**

EP 1 404 104 B1

# FIG. 9

1100

1013 GENERAL BUS

1019

1005

1004 PRINTER CONTROLLER

HDD

1014 NIC

1015a

COLOR VARIABLE-LENGTH-REVERSIBLE COMPRESSED DATA EXPANDER 1004a

MONOCHROME BINARY VARIABLE-LENGTH REVERSIBLE COMPRESSED DATA-EXPANDER 1004b

MEMORY C 1111a
MEMORY M 1111b
MEMORY Y 1111c
MEMORY K 1111d
1111

DATA FORMAT CONVERTER 1010

1100b PRINTER CONTROLLER SECTION

FAX CONTROLLER

MONOCHROME BINARY VARIABLE-LENGTH REVERSIBLE COMPRESSED DATA-EXPANDER 1013a

1003 COLOR MONOCHROME MULTINARY DATA FIXED-LENGTH COMPRESSOR

1006 COLOR MONOCHROME MULTINARY DATA FIXED-LENGTH EXPANDER

1002 SCANNING CORRECTION SECTION

CMYK

1012a CPU BUS

1007 PRINTING CORRECTION SECTION 1009

CMYK

IMAGING UNIT

1001 READER

RGB 1012

ENGINE CONTROLLER

1100a ENGINE SECTION

# FIG. 10

1002

RGB → **SCANNING γ PROCESSOR** (1021) → RGB → **FILTERING PROCESSOR** (1022) → CMYK → **COLOR CORRECTION PROCESSOR** (1023) → CMYK → **MULTIPLYING PROCESSOR** (1024) → CMYK

# FIG. 11

1007

CMYK → **PRINTING γ PROCESSOR** (1071) → CMYK 4×8bit → **HALF-TONE PROCESSOR** (1072) → CMYK 4×2bit

EP 1 404 104 B1

# FIG. 12

1013 GENERAL BUS 1014

1100

FAX CONTROLLER 1015a

MONOCHROME BINARY VARIABLE-LENGTH REVERSIBLE COMPRESSED DATA-EXPANDER

1013a

NIC 1019

1002

PRINTER CONTROLLER 1004 1005

COLOR VARIABLE LENGTH-REVERSIBLE COMPRESSED DATA EXPANDER

MONOCHROME BINARY VARIABLE-LENGTH REVERSIBLE COMPRESSED DATA-EXPANDER

HDD PRINTER OUTPUT DATA

1001

READER RGB

SCANNING CORRECTION SECTION CMYK

1003

COLOR MONOCHROME MULTIVALUE DATA FIXED-LENGTH COMPRESSOR

1012

ENGINE CONTROLLER

1012a CPU BUS

1004a 1004b

MEMORY C 1011a

MEMORY M 1011b

MEMORY Y 1011c

MEMORY K 1011d

1006

1007

PRINTING CORRECTION SECTION CMYK

COLOR MONOCHROME MULTIVALUE DATA FIXED-LENGTH EXPANDER

1010b 1010a 1010c 1010d 1010e

EXPANDER MULTIVALUE CONVERTER RESOLUTION CONVERTER COLOR-SPACE CONVERTER COMPRESSOR

1009

IMAGING UNIT

DATA FORMAT CONVERTER 1010

1100a ENGINE SECTION

1100b PRINTER CONTROLLER SECTION

EP 1 404 104 B1

# FIG. 13

1010

SPECIFIC DATA FORMAT INPUT DATA → **BLOCK FIXED-LENGTH EXPANDER** (1101,1010a,1010b) → MULTIVALUE DATA → **IMAGE PROCESSOR** (1102,1010c,1010d) → MULTIVALUE DATA → **JPEG COMPRESSOR** (1103,1010e) → GENERAL DATA FORMAT OUTPUT DATA

EP 1 404 104 B1

# FIG. 14A

1010c

INPUT MULTIVALUE DATA

1104
RESOLUTION CONVERTER BLOCK IN MAIN SCANNING DIRECTION

1105
RESOLUTION CONVERTER BLOCK IN SECONDARY SCANNING DIRECTION

OUTPUT MULTIVALUE DATA

# FIG. 14B

1106

1104

INPUT MULTIVALUE DATA

FF → FF ··· FF → FF

TO RESOLUTION CONVERTER BLOCK IN SECONDARY SCANNING DIRECTION

1107
INTERPOLATION PIXEL CALCULATOR

RESOLUTION CONVERTER BLOCK IN MAIN SCANNING DIRECTION

# FIG. 14C

MULTIVALUE DATA AFTER RESOLUTION CONVERSION IN MAIN SCANNING DIRECTION

RESOLUTION CONVERTER BLOCK IN SECONDARY SCANNING DIRECTION

1105

SECONDARY SCANNING LINE STORAGE MEMORY

1109

LINE MEMORY ⌐1108a
LINE MEMORY ⌐1108b
LINE MEMORY ⌐1108c
LINE MEMORY ⌐1108d

1108

INTERPOLATION PIXEL CALCULATOR

OUTPUT MULTIVALUE DATA

# FIG. 15A

# FIG. 15B

# FIG. 15C

# FIG. 16

ATTRIBUTE OF IMAGE
DATA TO BE REQUIRED
RESOLUTION: 600dpi
COLOR SPACE: sRGB
FILE FORMAT: JPEG

1019b

A

CLIENT PC

1005

ATTRIBUTE OF IMAGE
DATA TO BE REQUIRED
RESOLUTION: 100dpi
COLOR SPACE: Yuv
FILE FORMAT: JPEG2000

HDD
ATTRIBUTE OF
IMAGE DATA STORED
RESOLUTION: 600dpi
COLOR SPACE: CMYK

ATTRIBUTE OF IMAGE
DATA TO BE REQUIRED
RESOLUTION: 400dpi
COLOR SPACE: Lab
FILE FORMAT: TIFF

1019a

C

CLIENT PC

1019c

B

CLIENT PC

# FIG. 17

1010

1010a — EXPANDER → 1010b — MULTINARY CONVERTER → 1010d — COLOR-SPACE CONVERTER → 1010f — COLOR-GREY CONVERTER → 1010c — RESOLUTION CONVERTER

1010g — FILTERING PROCESSOR → 1010h — $\gamma$ PROCESSOR → 1010i — HALF-TONE PROCESSOR → 1010e — COMPRESSOR

EP 1 404 104 B1

# FIG. 18

1010

SPECIFIC
DATA
FORMAT
INPUT
DATA

1201,1010a,1010b

BLOCK FIXED-
LENGTH
EXPANDER

MULTIVALUE DATA

IMAGE
PROCESSOR

MULTIVALUE DATA

1203,1010e

JPEG
COMPRESSOR

GENERAL
DATA
FORMAT
OUTPUT
DATA

1202,1010c,1010d,1010e,1010f,1010g,1010h,1010i

EP 1 404 104 B1

# FIG. 19A

- - - - BASE IMAGE DATA
———— IMAGE DATA AFTER FILTERING

DYNAMIC RANGE OF IMAGE DATA

# FIG. 19B

———— BASE IMAGE DATA
- - - - IMAGE DATA AFTER FILTERING

DYNAMIC RANGE OF IMAGE DATA

# FIG. 19C

X DIRECTION

Y DIRECTION

| $X_{n-2}, m-2$ | $X_{n-2}, m-1$ | $X_{n-2}, m$ | $X_{n-2}, m+1$ | $X_{n-2}, m+2$ |
|---|---|---|---|---|
| $X_{n-1}, m-2$ | $X_{n-1}, m-1$ | $X_{n-1}, m$ | $X_{n-1}, m+1$ | $X_{n-2}, m+2$ |
| $X_{n}, m-2$ | $X_{n}, m-1$ | $X_{n,m}$ | $X_{n}, m+1$ | $X_{n}, m+2$ |
| $X_{n+1}, m-2$ | $X_{n+1}, m-1$ | $X_{n+1}, m$ | $X_{n+1}, m+1$ | $X_{n+1}, m+2$ |
| $X_{n+2}, m-2$ | $X_{n+2}, m-1$ | $X_{n+2}, m$ | $X_{n+2}, m+1$ | $X_{n+2}, m+2$ |

$X_{n,m}$ TARGET PIXEL

# FIG. 20A

DYNAMIC RANGE AFTER γ CONVERSION

DYNAMIC RANGE OF BASE
IMAGE DATA

# FIG. 20B

γ CONVERSION TABLE IN WHICH DENSITY OF IMAGE
IN LINEAR γ CONVERSION TABLE IS CHANGED
WITHOUT CHANGING DENSITY CHARACTERISTICS

DYNAMIC RANGE AFTER γ CONVERSION

LINEAR γ
CONVERSION TABLE

γ CONVERSION TABLE IN WHICH
DENSITY SLOPE IN LINEAR γ
CONVERSION TABLE IS CHANGED

DYNAMIC RANGE OF BASE
IMAGE DATA

# FIG. 21A

82

# FIG. 21B

81

DITHER
THRESHOLD MATRIX

# FIG. 22

91

92

93

■ TARGET PIXEL
□ ERROR PIXEL

# FIG. 23

RESOLUTION: 600dpi
COLOR SPACE: GREY SCALE
FILE FORMAT: JPEG

1019a

| ATTRIBUTE OF IMAGE |
| DATA TO BE REQUIRED |

A

CLIENT PC

| ATTRIBUTE OF |
| IMAGE DATA STORED |

1005

RESOLUTION: 600dpi
COLOR SPACE: CMYK

HDD

1019b

C

CLIENT PC

| ATTRIBUTE OF IMAGE |
| DATA TO BE REQUIRED |

RESOLUTION: 100dpi
COLOR SPACE: GREY SCALE
FILE FORMAT: JPEG2000

1019c

B

CLIENT PC

| ATTRIBUTE OF IMAGE |
| DATA TO BE REQUIRED |

RESOLUTION: 400dpi
COLOR SPACE: MONOCHROME
BINARY
FILE FORMAT: TIFF

# FIG. 24

EP 1 404 104 B1

1010

1010a
EXPANDER

1010b
MULTINARY CONVERTER

1010c
RESOLUTION CONVERTER

1010g
FILTERING PROCESSOR

1010h
$\gamma$ PROCESSOR

1010i
HALF-TONE PROCESSOR

1010e
COMPRESSOR

# FIG. 25

1010

DATA FORMAT CONVERTER

SPECIFIC
DATA
FORMAT
INPUT
DATA

1301,1010a,1010b

BLOCK FIXED-
LENGTH
EXPANDER

MULTIVALUE DATA

IMAGE
PROCESSOR

MULTIVALUE DATA

1303,1010e

JPEG
COMPRESSOR

GENERAL
DATA
FORMAT
OUTPUT
DATA

1302,1010c,1010g,1010h,1010i

EP 1 404 104 B1

# FIG. 26

1019a

ATTRIBUTE OF IMAGE
DATA TO BE REQUIRED

A
CLIENT PC

RESOLUTION: 600dpi
FILE FORMAT: JPEG

1005

RESOLUTION: 600dpi
COMPRESSION: NIL

HDD

RESOLUTION: 100dpi
FILE FORMAT: JPEG2000

1019b

C
CLIENT PC

ATTRIBUTE OF IMAGE
DATA TO BE REQUIRED

RESOLUTION: 400dpi
FILE FORMAT: TIFF

1019c

B
CLIENT PC

ATTRIBUTE OF IMAGE
DATA TO BE REQUIRED

## REFERENCES CITED IN THE DESCRIPTION

**Patent documents cited in the description**

- JP 2000333026 A
- JP 2002333026 A
- US 7164486 B1
- US 6069706 A
- JP 11298697 A
- US 2002080250 A1
- WO 9534051 A
- EP 1187446 A
- US 2001051007 A1
- EP 1508098 A
- JP HEI9107484 B
- JP H11331844 B
- JP HEI11331844 B

**Non-patent literature cited in the description**

- *PATENT ABSTRACTS OF JAPAN,* 31 January 2000, vol. 2000 (01